# EUROPÄISCHE PATENTANMELDUNG

(11) **EP 3 835 279 A1**
(43) Veröffentlichungstag der Anmeldung: **16.06.2021**
(21) Anmeldenummer: 19214397.2
(22) Anmeldetag: 09.12.2019
(51) Int. Cl.: C04B 20/00, C04B 26/06, C04B 26/16, C04B 40/06

(54) **FÜLLSTOFFMISCHUNG FÜR CHEMISCHE BEFESTIGUNGSSYSTEME UND DEREN VERWENDUNG**

(71) Anmelder: Hilti Aktiengesellschaft, 9494 Schaan (LI)
(72) Erfinder: Bürgel, Thomas, 86899 Landsberg (DE); Sirch, Vanessa, 86836 Untermeitingen (DE)
(74) Vertreter: Hilti Aktiengesellschaft Corporate Intellectual Property

(57) **Zusammenfassung**

Es wird eine Härterzusammensetzung für ein Reaktivharzsystem mit einem Reaktivharz auf Basis radikalisch härtbarer, ethylenisch ungesättigter Verbindungen beschrieben, wobei die Härterzusammensetzung ein Härtungsmittel für das Reaktivharz und eine Füllstoffmischung umfasst. Die Füllstoffmischung besteht dabei aus einem ersten Füllstoff mit einer ersten mittleren Korngröße d_{50,1} und einem zweiten Füllstoff mit einer zweiten mittleren Korngröße d_{50,2}, wobei die erste mittlere Korngröße d_{50,1} des ersten Füllstoffs größer als die zweite mittlere Korngröße d_{50,2} des zweiten Füllstoffs ist (d_{50,1} > d_{50,2}) und das Verhältnis d_{50,1} zu d_{50,2} (d_{50,1} : d_{50,2}) im Bereich von 8:1 bis 100:1 liegt. Ferner wird die Verwendung der Füllstoffmischung sowie ein die Härterzusammensetzungen enthaltendes Reaktionsharzsystem beschrieben.

## Beschreibung

Die Erfindung betrifft hochgefüllte Härterzusammensetzungen für die Verwendung in Injektionsmörteln für die chemische Befestigungstechnik, insbesondere hochgefüllte Härterzusammensetzungen auf der Basis von Peroxiden für Harzzusammensetzungen auf der Basis von radikalisch härtbaren Verbindungen.

Injektionsmörtel auf Basis radikalisch härtbarer Verbindungen für die chemische Befestigungstechnik basieren auf polymerisierbaren Harzen, die in der Regel mit Peroxiden als Radikalbildner, auch als Härtungsmittel bezeichnet, ausgehärtet werden. Diese Produkte werden mehrkomponentig, bevorzugt zweikomponentig formuliert und in Mehr-, bevorzugt Zweikammergebinden reaktionshindernd verpackt.

Da das dabei bevorzugt verwendete Peroxid, nämlich Dibenzoylperoxid, ein Feststoff ist, ist es notwendig, diesen in eine fließfähige Form zu bringen. Hierzu und zur Einstellung der Fließfähigkeit sowie der Konzentration des Radikalbildners in der Härterzusammensetzung beziehungsweise zur Einstellung des Volumens der Härterzusammensetzung werden nach dem Stand der Technik sogenannte Phlegmatisierungsmittel verwendet. Diese dienen einerseits als Verdünnungsmittel und andererseits dazu, eine unerwünschte Zersetzung der Radikalbildner zu vermeiden. Als solche Phlegmatisierungsmittel wurden bereits verschiedene Arten von nichtreaktiven Weichmachern, beispielsweise Dicarbonsäureester, wie Dioctylphthalat, Dioctyladipat, flüssige Polyester oder Polyalkylenglykolderivate verwendet, wie beispielsweise in der DE 3226602 A1, EP 0432087 A1 und EP 1371671 A1 beschrieben.

Nachteilig an diesen Systemen ist, dass diese Verbindungen nicht an der Härtung der Harze beteiligt sind und somit nahezu unverändert in der ausgehärteten Masse vorliegen und auch dort eine weichmachende Funktion haben. Dies wirkt sich negativ auf die Eigenschaften der ausgehärteten Masse, insbesondere die erreichbaren Lastwerte aus.

Aus der DE 4231161 A1 und der DE 4337264 A1 etwa ist ein organisches/anorganisches Hybridsystem bekannt, welches hydraulisch kondensierbare Verbindungen enthält und somit ermöglicht, Wasser als Phlegmatisierungsmittel einzusetzen. Nach dem Vermischen der Komponenten wird das Wasser durch die vorhandenen hydraulisch kondensierbaren Verbindungen gebunden und hat somit in der ausgehärteten Masse keine weichmachende Funktion mehr.

Nachteilig an diesen Hybridsystemen ist jedoch, dass obwohl das Wasser zum Teil mit dem Zement abreagiert, ein hoher Wassergehalt verbleibt, was zu geringeren Versagenslasten führt, als die wasserfreie Harzmatrix dies ermöglichen würde.

Um den Wasseranteil möglichst gering zu halten, wird die Härterzusammensetzung deshalb mit feinen Füllstoffen gefüllt. Mit dem Füllgrad steigt jedoch auch die Viskosität der Komponente und somit die Kraft, mit der solche Komponenten ausgepresst werden können. Somit muss bei den derzeit auf dem Markt befindlichen Hybridsystemen ein Kompromiss zwischen hohen Versagenslasten und Verarbeitbarkeit der Massen gefunden werden.

Es ist daher Aufgabe der Erfindung den Wassergehalt von bereits hoch gefüllten Härterzusammensetzungen in der Härterzusammensetzung zu verringern, ohne die Auspresskraft deutlich zu erhöhen.

Es sind theoretische Konzepte zur Optimierung der Zusammenstellung von Mischungen bekannt, etwa die Toufar- oder die Fuller-Mischung. Ferner ist bekannt, dass sich eine Kombination verschiedener Füllstoffe positiv auf die Fließfähigkeit auswirkt. Solche Modelle sind jedoch relativ komplex und die kommerzielle Herstellung solcher Mischungen erfordern eine Vielzahl von verschiedenen Rohstoffen, so dass deren Einsatz unwirtschaftlich, insbesondere teuer, ist.

Überraschenderweise zeigte es sich, dass eine einfache Mischung zweier Füllstoffe mit unterschiedlicher mittlerer Korngröße (dso) ausreicht, um den möglichen Füllgrad einer Härterzusammensetzung auf Basis einer wässrigen Peroxidlösung oder -suspension unter Erhalt der Fließfähigkeit zu erhöhen, wenn die mittlere Korngröße (d₅₀) beider Füllstoffe in einem bestimmten Verhältnis liegt. Durch einen höheren Füllgrad, d.h. einen höheren Anteil an Füllstoffen, kann der Wassergehalt reduziert werden.

Die gröberen Füllstoffe liegen dabei bevorzugt als Hauptfüllstoff in größerer Menge vor, die kleineren Füllstoffe werden, verglichen zu der Menge des Hauptfüllstoffs, in geringerer Menge eingesetzt.

Durch Anwendung dieser Erfindung ist es möglich, Injektionsmörtel mit hoher Leistungsfähigkeit und guten Verarbeitungseigenschaften zu formulieren. Dies ist besonders wichtig, wenn in umweltschonende Foliengebinde verpackt werden soll, da es damit schwierig ist, hohe Mischungsverhältnisse (Harzzusammensetzung Härterzusammensetzung) zu realisieren.

Verglichen mit den bekannten hochgefüllten, aber schwer auspressbaren Härterzusammensetzungen, können die erfindungsgemäßen Härterzusammensetzungen im Statikmischer gut mit der Harzzusammensetzung vermischt werden und führen so zu einer stabilen Aushärtung des Injektionsmörtels.

Zum besseren Verständnis der Erfindung werden die folgenden Erläuterungen der hierin verwendeten Terminologie als sinnvoll erachtet. Im Sinne der Erfindung bedeuten:
- *"Reaktionsharz",* auch *"Basisharz"* genannt, eine üblicherweise feste oder hochviskose *"radikalisch härtbare",* d.h. polymerisierbare Verbindung, welche durch Polymerisation härtet und eine Harzmatrix bildet; das Reaktionsharz ist das Umsetzungsprodukt einer Bulkreaktion an sich; hiervon ist auch der Reaktionsansatz zur Herstellung des Basis-Harzes nach beendeter Reaktion umfasst, der ohne Isolierung des Produkts vorliegt und daher neben der radikalisch härtbaren Verbindung, das Reaktionsharz, einen Reaktivverdünner, einen Stabilisator und einen Katalysator, sofern verwendet, enthalten kann;
- *"Inhibitor"* eine zur Inhibierung der Polymerisationsreaktion (Härtung) fähige Verbindung, die dazu dient, die Polymerisationsreaktion und damit ein unerwünschtes vorzeitiges Polymerisieren der polymerisierbaren Verbindung, des Reaktionsharzes, während der Lagerung zu vermeiden (in dieser Funktion oftmals auch als Stabilisator bezeichnet) und/oder den Start der Polymerisationsreaktion unmittelbar nach der Zugabe des Härtungsmittels zu verzögern; welche Aufgabe der Inhibitor hat, hängt davon ab, in welchen Mengen er eingesetzt wird;
- *"Reaktivverdünner"* flüssige oder niedrigviskose Monomere und Oligomere, welche das Reaktionsharz verdünnen und dadurch die zu deren Applikation notwendige Viskosität verleihen, eine oder mehrere zur Reaktion mit dem Reaktionsharz befähigte funktionelle Gruppen enthalten und bei der Polymerisation (Härtung) zum überwiegenden Teil Bestandteil der gehärteten Masse (Harzmatrix) werden;
- *"Härtungsmittel"* Stoffe, welche die Polymerisation (das Härten) der polymerisierbaren Verbindung, des Reaktionsharzes, bewirken;
- *"Beschleuniger"* eine zur Beschleunigung der Polymerisationsreaktion (Härtung) fähige Verbindung, die dazu dient, die Bildung von Radikalen zu beschleunigen;
- *"Füllstoff"* eine organische oder anorganische, insbesondere anorganische Verbindung, die passiv und/oder reaktiv und/oder funktional sein kann; "passiv" bedeutet dabei, dass die Verbindung unverändert von der härtenden Harzmatrix umschlossen wird; "reaktiv" bedeutet dabei, dass die Verbindung in die Harzmatrix einpolymerisiert und ein erweitertes Netzwerk mit dem Reaktionsharz bildet; "funktional" bedeutet dabei, dass die Verbindung nicht in die Harzmatrix einpolymerisiert aber eine bestimmte Funktion in der Formulierung erfüllt, wobei in diesem Fall auch von *"Additiven"* gesprochen wird;
- *"Harzzusammensetzung"* eine Mischung aus der polymerisierbaren Verbindung, dem Reaktionsharz, und anorganischen und/oder organischen Additiven und Füllstoffen, wie etwa einem Inhibitor und/oder einem Beschleuniger;
- *"Härterzusammensetzung"* eine Mischung aus dem Härtungsmittel und anorganischen und/oder organischen Füllstoffen, wie etwa ein Phlegmatisierungsmittel, d.h. Stabilisierungsmittel für das Härtungsmittel;
- *"hochgefüllte Härterzusammensetzung",* dass die Härterzusammensetzung eine überwiegende Menge an Füllstoffen, insbesondere anorganischen Füllstoffen und somit einen hohen Füllgrad von über 50 Vol.-% Füllstoffen aufweist;
- *"Gesamtfüllgrad"* die Summe aller Füllstoffe bzw. Feststoffe einschließlich etwaiger fester Peroxide und einschließlich des ersten Füllstoffs FS1 und des zweiten Füllstoffs FS2;
- *"Grundfüllgrad"* die Summe aller Füllstoffe bzw. Feststoffe einschließlich etwaiger fester Peroxide, vor der Zugabe des ersten Füllstoffs FS1 und des zweiten Füllstoffs FS2;
- *"maximaler Füllgrad"* ist der Füllgrad, bei dem nach der Zugabe des ersten Füllstoffs FS1 aber vor der Zugabe des zweiten Füllstoffs FS2 die Auspresskraft der Härterzusammensetzung mindestens das dreifache der Auspresskraft erreicht hat, wie sie mit 2 Vol.-% weniger Füllgrad erhalten wurde;
- *"Grenzfüllgrad"* der Füllgrad, bei dem die Härterzusammensetzung noch leicht auspressbar ist, der sich aus dem maximalen Füllgrad ergibt und so viel weniger an erstem Füllstoff FS1 enthält, dass der Füllgrad um etwa 5 Vol.-% gegenüber dem maximalen Füllgrad verringert ist;
- *"zweikomponentiges Reaktionsharzsystem"* ein Reaktionsharzsystem, das zwei voneinander getrennt gelagerte Komponenten, im Allgemeinen eine Harzkomponente, enthaltend die Harzzusammensetzung, und eine Härterkomponente, enthaltend die Härterzusammensetzung, umfasst, so dass eine Härtung des Reaktionsharzes erst nach dem Mischen der beiden Komponenten erfolgt;
- *"mehrkomponentiges Reaktionsharzsystem"* ein Reaktionsharzsystem, das mehrere voneinander getrennt gelagerte Komponenten umfasst, so dass eine Härtung des Reaktionsharzes erst nach dem Mischen aller Komponenten erfolgt;
- *"(Meth)acryl...*/*...(meth)acryl...",* dass sowohl die "Methacryl.../...methacryl... "- als auch die "Acryl.../...acryl... "-Verbindungen umfasst sein sollen; bevorzugt sind in der vorliegenden Erfindung "Methacryl.../... methacryl..." -Verbindungen;
- *"ein", "eine", "einer"* als Artikel vor einer chemischen Verbindungsklasse, z.B. vor dem Wort "Reaktivverdünner", dass eine oder mehrere unter diese chemische Verbindungsklasse fallende Verbindungen, z.B. verschiedene *"Reaktivverdünner",* gemeint sein können;
- *"mindestens ein", "mindestens eine", "mindestens einer"* zahlenmäßig *"ein oder mehrere"*; in einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können; diese Begriffe sind einschließlich gemeint und umfassen daher auch *"bestehen aus"*; *"bestehen aus"* ist abschließend gemeint und bedeutet, dass keine weiteren Bestandteile vorhanden sein können; in einer bevorzugten Ausführungsform bedeuten die Begriffe *"enthalten", "umfassen"* und *"beinhalten"* den Begriff *"bestehen aus"*;
- *"etwa"* vor einem Zahlenwert einen Bereich von ± 5% dieses Wertes, bevorzugt ± 2% dieses Wertes, besonders bevorzugt ± 0% dieses Wertes (also genau diesen Wert);
- ein durch Zahlen begrenzter Bereich, dass die beiden Eckwerte und jeder Wert innerhalb dieses Bereichs einzeln offenbart sind.

Alle in diesem Text genannten Normen (z.B. DIN-Normen) wurden in der zum Anmeldetag dieser Anmeldung aktuellen Ausgabe verwendet.

Ein erster Gegenstand der Erfindung ist eine Härterzusammensetzung für ein Reaktivharzsystem mit einem Reaktivharz auf Basis radikalisch härtbarer Verbindungen, wobei die Härterzusammensetzung ein Härtungsmittel für das Reaktivharz und eine Füllstoffmischung umfasst, welche dadurch gekennzeichnet ist, dass die Füllstoffmischung aus einem ersten Füllstoff FS1 mit einer ersten mittleren Korngröße d_{50,1} und einem zweiten Füllstoff FS2 mit einer zweiten mittleren Korngröße d_{50,2} besteht, wobei die erste mittlere Korngröße d_{50,1} des ersten Füllstoffs größer als die zweite mittlere Korngröße d_{50,2} des zweiten Füllstoffs ist (d_{50,1} > d_{50,2}) und das Verhältnis d_{50,1} zu d_{50,2} (d_{50,1} : d_{50,2}) im Bereich von etwa 8:1 bis etwa 100:1 liegt.

### Füllstoffe/Füllstoffmischung

Mit der erfindungsgemäßen Mischung zweier Füllstoffe mit unterschiedlicher mittlerer Korngröße (dso) kann der mögliche Füllgrad einer Härterzusammensetzung, insbesondere einer Härterzusammensetzung auf Basis einer wasser- oder lösungsmittelbasierten Peroxidzusammensetzung, unter Erhalt der Fließfähigkeit der Härterzusammensetzung um mehr als 5 Vol.-% und je nach Füllstoffmischung sogar um mehr als 8 Vol.-%, jeweils bezogen auf die Härterzusammensetzung, erhöht werden.

Erfindungsgemäß besteht die Füllstoffmischung aus einem ersten Füllstoff FS1 mit einer ersten mittleren Korngröße d_{50,1} und einem zweiten Füllstoff FS2 mit einer zweiten mittleren Korngröße d_{50,2}, wobei die erste mittlere Korngröße d_{50,1} des ersten Füllstoffs FS1 größer als die zweite mittlere Korngröße d_{50,2} des zweiten Füllstoffs FS2 ist (d_{50,1} > d_{50,2}) und das Verhältnis d_{50,1} zu d_{50,2} (d_{50,1} : d_{50,2}) im Bereich von 8:1 bis 100:1 liegt.

Bevorzugt beträgt die erste mittlere Korngröße d_{50,1} des ersten Füllstoffs FS1 16 µm bis 130 µm. Die zweite mittlere Korngröße d_{50,2} des zweiten Füllstoffs FS2 beträgt bevorzugt 0,16 µm bis 16 µm.

Die chemische Zusammensetzung der Füllstoffe ist dabei zweitrangig. Geeignet sind natürliche oder synthetische, anorganische Materialien, bevorzugt mittlerer oder höherer Härte, insbesondere einer Mohs-Härte zwischen 2 und 10. Es können aber auch organische Feststoffe verwendet werden.

Geeignete Füllstoffe sind beispielsweise Metalloxide oder Halbmetalloxide wie Aluminiumoxid oder Titandioxid; Metallhydroxide wie Aluminiumhydroxid; Salze wie Kalziumcarbonat oder Bariumsulfat; mineralische oder mineralähnliche Füllstoffe wie verschiedene Silikate oder Aluminate sowie Mischungen dieser, etwa Quarz, Glas, Sand, Quarzsand, Quarzmehl, Porzellan, Korund, Keramik, Talkum, Kieselsäure (z. B. pyrogene Kieselsäure), Silikate, Ton, Kreide, Schwerspat, Feldspat, Basalt, Granit oder Sandstein, Gläser, Keramik, sowie Natursteine wie Basalt; hydraulisch härtbare Füllstoffe, wie Gips, Branntkalk oder Zement (z. B. Tonerde- oder Portlandzement); Metalle wie Aluminium; Ruß; polymere Füllstoffe wie Duroplaste.

Bevorzugt ist der erste Füllstoff FS1 unter Halbmetalloxiden Metalloxiden, Halbmetalloxiden und Metallhydroxiden, wie Siliziumdioxid, insbesondere Quarz, Aluminiumoxid und Aluminiumhydroxid ausgewählt.

Weiter bevorzugt ist der zweite Füllstoff FS2 aus der Gruppe ausgewählt, bestehend aus Metallsalzen, wie Kalziumcarbonat oder Bariumsulfat.

Gemäß einer besonders bevorzugten Ausführungsform der Erfindung liegen die gröberen Füllstoffe dabei als Hauptfüllstoff in größerer Menge vor, die kleineren Füllstoffe werden, verglichen zu der Menge des Hauptfüllstoffs, in geringerer Menge eingesetzt. Somit ist der Anteil an erstem Füllstoff FS1 größer als der Anteil an zweitem Füllstoff FS2.

Zweckmäßig wird der Anteil der Füllstoffe als Volumenanteil angegeben. Allerdings hängt die zu verwendende Menge an erstem Füllstoff FS1 und zweitem Füllstoff FS2 von den jeweils verwendeten Füllstoffen ab, genauer von deren Korngröße, und lässt sich nicht pauschal durch einen Zahlenwert beschreiben.

Die Höchstmenge an erstem Füllstoff ist dementsprechend für jeden Füllstoff FS1 separat experimentell zu ermitteln. Höchstmenge ist dabei die Menge an erstem Füllstoff FS1, von der ausgehend der zweite Füllstoff FS2 in entsprechender Menge zugegeben wird, um die Füllstoffmischung zu erhalten.

Die Höchstmenge an erstem Füllstoff FS1 wird wie folgt ermittelt: Zunächst wird die Menge (Summe) aller Feststoffe einschließlich etwaiger fester Peroxide und gegebenenfalls weiterer Feststoffe, wie feste Additive, vor der Zugabe des ersten Füllstoffs FS1 und des zweiten Füllstoffs FS2 bestimmt. Dies entspricht dem Grundfüllgrad. Ausgehend von diesem Grundfüllgrad wird schrittweise der erste Füllstoff FS1 zugegeben und nach jeder Zugabe die Auspresskraft ermittelt. Ist die Auspresskraft erstmalig exponentiell um ein Vielfaches, etwa um das Dreifache oder mehr, angestiegen. Ist keine weitere Zugabe an erstem Füllstoff mehr erforderlich. Die Menge an erstem Füllstoff FS1 bei der erstmalig der exponentielle Anstieg der Auspresskraft beobachtet wird, wird als maximaler Füllgrad bezeichnet. Ausgehend von diesem maximalen Füllgrad wird eine bestimmte Menge an erstem Füllstoff FS1 abgezogen, so dass der Füllgrad wieder in einem Bereich ist, bei dem die Auspresskraft noch niedrig ist. Dieser Füllgrad, bei dem die Zusammensetzung noch leicht auspressbar ist, der die Summe aller Feststoffe einschließlich etwaiger fester Peroxide und einschließlich dem ersten Füllstoff FS1 enthält, wird als Grenzfüllgrad bezeichnet.

Ausgehend von dem Grenzfüllgrad wird dann der zweite Füllstoff FS2 zugegeben, wobei der Gesamtfüllgrad über die Menge des maximalen Füllgrades hinausgehen kann, ohne dass die Auspresskräfte merklich ansteigen. Der Gesamtfüllgrad entspricht dabei der Summe aus dem Grundfüllgrad und der Füllstoffmischung FS1 und FS2.

Die Höchstmenge an erstem Füllstoff FS1 mit der mittleren Teilchengröße d_{50,1} kann insbesondere ermittelt werden, indem der Füllstoff FS1 in Schritten von jeweils 2 Vol.-% zu der Härterzusammensetzung gegeben wird, bis sich die Auspresskraft der Härterzusammensetzung, verglichen zum vorherigen Schritt (vorherige Zugabe), erstmals mindestens verdreifacht. Nach jeder Füllgraderhöhung wird die Auspresskraft bei einer gegebenen Temperatur (+23°C) ermittelt. Der Anteil an erstem Füllstoff FS1 wird erhöht, bis die Auspresskraft um ein Dreifaches des jeweils vorhergehenden Wertes angestiegen ist. Der dann erreichte Füllgrad, ggf. unter Einbeziehung des Grundfüllgrades durch das feste Peroxid und eventuell weitere Feststoffe, wird als maximaler Füllgrad bezeichnet. Da bei diesem Füllgrad der Anteil des Füllstoffs FS1 bereits zu hoch ist, um den maximalen Effekt der Erfindung zu erreichen bzw. auszuschöpfen, wird, ausgehend von dem maximalen Füllgrad die Menge an erstem Füllstoff FS1 wieder reduziert. Hierbei hat sich eine Reduzierung des Anteils an erstem Füllstoff FS1 an der Härterzusammensetzung um etwa 5 Vol.-% als zweckmäßig herausgestellt.

Zu dieser Menge an Füllstoff FS1 wird der zweite Füllstoff FS2 mit der mittleren Teilchengröße d_{50,2} gegeben, um die erfindungsgemäße Füllstoffmischung zu erhalten. Die Menge an zweitem Füllstoff FS2 wird so gewählt, dass das Volumenverhältnis von erstem Füllstoff zu zweiten Füllstoff (V_{FS1} : V_{FS2}) im Bereich von 1,5:1 bis 15:1, bevorzugt 2:1 bis 10:1 und stärker bevorzugt 2,5:1 bis 5:1 beträgt.

### Härtungsmittel für radikalisch härtbare, ethylenisch ungesättigte Verbindungen

Wird die Härterzusammensetzung für Harzzusammensetzungen auf der Basis von radikalisch härtbaren, ethylenisch ungesättigten Verbindungen verwendet, enthält die Härterzusammensetzung ein Härtungsmittel für die radikalisch härtbare, ethylenisch ungesättigte Verbindung.

Alle dem Fachmann bekannten Peroxide, die zum Härten von Methacrylatharzen verwendet werden können, können eingesetzt werden. Derartige Peroxide umfassen organische und anorganische Peroxide, entweder flüssig oder fest. Beispiele geeigneter, organischer Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-) und dergleichen. Diese können auch als Oligomer oder Polymer vorliegen. Eine umfassende Reihe an Beispielen für geeignete Peroxide ist zum Beispiel in der Anmeldung US 2002/0091214 A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie *tert*-Butylperester (z.B. *tert*-Butylperoxybenzoat), Dibenzoylperoxid, Peracetate und Perbenzoate, Dilauroylperoxid, einschließlich (Di)peroxyester, Perether, wie Peroxydiethylether, Perketone, wie Methylethylketonperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden sind. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Dibenzoylperoxid (BPO) oder *tert*-Butylperoxybenzoat verwendet.

Als anorganische Peroxide können insbesondere Persulfate, Perborate und/oder Perphosphate, wie Ammoniumpersulfat, Kalium- und Natriummonopersulfate oder Kalium- und Natriumdipersulfate, verwendet werden. Aber auch Wasserstoffperoxid kann verwendet werden.

Auch die Verwendung von organisch substituierten Ammoniumpersulfaten (beispielsweise N'N'N'N'-Tetrabutylammonium- oder N'N'N'-Tricapryl-N'-methylammoniumpersulfat ist möglich.

Neben dem Peroxid enthält erfindungsgemäß die Härterzusammensetzung noch ein Phlegmatisierungsmittel um das Peroxid zu stabilisieren. Entsprechende Phlegmatisierungsmittel sind aus der DE 3226602 A1, EP 0432087 A1 und EP 1 371 671 A1 bekannt.

Die Härterzusammensetzung enthält bevorzugt Wasser als Phlegmatisierungsmittel. Neben dem Wasser kann die Härterzusammensetzung noch weitere Phlegmatisierungsmittel enthalten, wobei Wasser als alleiniges Phlegmatisierungsmittel bevorzugt ist, um keine Verbindungen einzubringen, die eine weichmachende Wirkung haben.

Bevorzugt liegt das Peroxid zusammen mit dem Wasser als Suspension vor. Entsprechende Suspensionen sind in unterschiedlichen Konzentrationen kommerziell erhältlich, wie beispielsweise die wässrigen Dibenzoylperoxid-Suspensionen von United Initiators (z.B. BP40SAQ), Perkadox 40L-W (Fa. Nouryon), Luperox® EZ-FLO (Fa. Arkema), Peroxan BP40W (Fa. Pergan).

Das Peroxid kann in einer Menge von 0,25 bis 35 Gew.-%, bevorzugt 1 bis 30 Gew.-%, besonders bevorzugt 5 bis 25 Gew.-%, bezogen auf die Härterzusammensetzung, in den Reaktionsharzsystem enthalten sein.

Die Wirkung der eingangs beschriebenen Füllstoffmischung kommt insbesondere bei wasserhaltigen Härterzusammensetzungen zum Tragen. Bei diesen Systemen ist die Verwendung der Füllstoffmischung besonders von Vorteil, da hier nicht nur der Anteil an niedrig viskosen Bestandteilen, sondern insbesondere der Anteil an Wasser, welches sich nachteilig auf die Aushärtung auswirkt, reduziert werden kann.

### Weitere Zusatzstoffe

Neben Wasser und dem Härtungsmittel enthalten kommerzielle Peroxid-Dispersionen weitere Zusatzstoffe, wie Emulgatoren, Frostschutzmittel, Puffer und Rheologieadditive in nicht veröffentlicher Art und Menge.

Darüber hinaus kann die Härterzusammensetzung zusätzlich weitere Zusatzstoffe oder Additive, namentlich Emulgatoren, Frostschutzmittel, Puffer und/oder Rheologieadditive, enthalten. Bevorzugt enthält die erfindungsgemäße Härterzusammensetzung keine weiteren organischen oder anorganischen Festoffe, insbesondere Füllstoffe. Es ist jedoch nicht ausgeschlossen, dass zusätzliche organische und/oder anorganische Feststoffe enthalten sein können, vorausgesetzt, diese beeinträchtigen den erfindungsgemäßen Effekt nicht negativ.

Geeignete Emulgatoren sind: ionische, nichtionische oder amphotere Tenside; Seifen, Netzmittel, Detergenzien; Polyalkylenglykolether; Salze von Fettsäuren, Mono- oder Diglyceride von Fettsäuren, Zuckerglyceride, Lecithin; Alkansulfonate, Alkylbenzolsulfonate, Fettalkoholsulfate, Fettalkoholpolyglykolether, Fettalkoholethersulfate, sulfonierte Fettsäuremethylester; Fettalkoholcarboxylate; Alkylpolyglycoside, Sorbitanester, N-Methylglucamide, Saccharoseester; Alkylphenole, Alkylphenolpolyglykolether, Alkylphenolcarboxylate; quartäre Ammoniumverbindungen, Esterquats, Carboxylate quartärer Ammoniumverbindungen.

Geeignete Frostschutzmittel sind: organische oder anorganische, wasserlösliche Zusätze, die die Einfriertemperatur des Wassers herabsetzen; Mono-, bi- oder höherfunktionelle Alkohole, wie Ethanol, n- oder iso-Propanol, n-, iso- oder tert.-Butanol und dergleichen; Ethylenglykol, 1,2- oder 1,3-Propylenglykol, Glycerol, Trimethylolpropan und dergleichen; Oligo- oder Polyglykole, wie Dialkylenglykole, Trialkylenglykole und dergleichen; Zucker, insbesondere Mono- oder Disaccharide; Triosen, Tetrosen, Pentosen und Hexosen in ihrer Aldehyl- oder Ketoform sowie der analogen Zuckeralkohole. Beispiele, aber nicht einschränkend, sind Glycerinaldehyd, Fructose, Glucose, Saccharose, Mannitol und dergleichen.

Geeignete Puffer sind organische oder anorganische Säure/Base-Paare, die den pH-Wert der Härterzusammensetzung stabilisieren, wie Essigsäure/Alkaliacetat, Zitronensäure/Monoalkalicitrat, Monoalkali-/Dialkalicitrat, Dialkali-/Trialkalicitrat, Kombinationen von mono-, di- und/oder tri-basichen Alkaliphosphaten ggf. mit Phosphorsäure; Ammoniak mit Ammoniumsalzen; Kohlensäure-Bicarbonat-Puffer und dergleichen. Verwendet werden können auch intramolekulare, sogenannte Good-Puffer, wie 4-(2-Hydroxyethyl)-1-piperazinethanesulfonsäure (HEPES) oder 2-(N-Morpholino)ethansulfonsäure (MES) sowie Tris(hydroxymethyl)-aminomethan (TRIS) und dergleichen.

Die Einstellung der Fließeigenschaften erfolgt über den Zusatz von verdickenden Substanzen, auch Rheologieadditive genannt. Geeignete Rheologieadditive sind: Schichtsilikaten wie Laponite, Bentone oder Montmorillonit, Neuburger Kieselerde, pyrogenen Kieselsäuren, Polysaccharide; Polyacrylat-, Polyurethan- oder Polyharnstoffverdicker sowie Celluloseester. Zur Optimierung können weiterhin Netz- und Dispergiermittel, Oberflächenadditive, Entschäumer & Entlüfter, Wachsadditive, Haftvermittler, Viskositätsreduzierer oder Prozessadditive zugesetzt werden. Auch für diese gilt, dass diese so auszuwählen sind, dass sie den erfindungsgemäßen Effekt nicht negativ beeinträchtigen.

Die Summe der nicht bereits in den kommerziellen Produkten enthaltenen Zusatzstoffe, wie (Rheologieadditive, Emulgatoren, Frostschutzmittel und dergleichen kann bei 0 Gew.-% bis 30 Gew.-%, bevorzugt 0 Gew.-% bis 25 Gew.-%, besonders bevorzugt bei 0 Gew.-% bis 20 Gew.-%, jeweils bezogen auf die Härterzusammensetzung, liegen.

### Verwendung der Füllstoffmischung

Die oben beschriebene Füllstoffmischung wird vorteilhaft in einer Härterzusammensetzung für Reaktivharz-Zusammensetzung mit einem Reaktivharz auf Basis radikalisch härtbarer, ethylenisch ungesättigter Verbindungen für die chemische Befestigung verwendet werden, um den Füllstoffanteil zu erhöhen, ohne die Fließfähigkeit der Härterzusammensetzung negativ zu beeinflussen. Damit ist es möglich, den Anteil an flüssigen Bestandteilen in der Härterzusammensetzung, insbesondere Wasser, deutlich zu verringern und trotz des hohen Anteils an Füllstoffen niedrige Auspresskräfte zu ermöglichen.

Demnach ist ein weiterer Gegenstand der Erfindung die Verwendung einer Füllstoffmischung aus einem ersten Füllstoff FS1 mit einer ersten mittleren Korngröße d_{50,1} und einem zweiten Füllstoff FS2 mit einer zweiten mittleren Korngröße d_{50,2}, wobei die erste mittlere Korngröße d_{50,1} des ersten Füllstoffs FS1 größer als die zweite mittlere Korngröße d_{50,2} des zweiten Füllstoffs FS2 ist (d_{50,1} > d_{50,2}) und das Verhältnis d_{50,1} zu d_{50,2} (d_{50,1} : d_{50,2}) im Bereich von 8:1 bis 100: 1 liegt, in einer Härterzusammensetzung für Reaktivharz-Zusammensetzung mit einem Reaktivharz auf Basis radikalisch härtbarer, ethylenisch ungesättigter Verbindungen für die chemische Befestigung zur Erhöhung des Füllstoffanteils unter Erhalt der Fließfähigkeit der Härterzusammensetzung.

Die erfindungsgemäße Härterzusammensetzung kann vorteilhaft in einem mehrkomponentigen Reaktionsharzsystem, was auch zweikomponentige Reaktionsharzsysteme miteinschließt, als Härterkomponente verwendet werden.

Ein weiterer Gegenstand der Erfindung ist demnach ein mehrkomponentiges Reaktionsharzsystem, umfassend eine Harzkomponente und die oben beschriebene Härterzusammensetzung als Härterkomponente. Die Harzkomponente enthält mindestens eine radikalisch härtbare ungesättigte Verbindung. Die radikalisch härtbare ungesättigte Verbindung kann ein Reaktionsharz sein. Alternativ kann die eine radikalisch härtbare ungesättigte Verbindung ein Reaktivverdünner sein. Gemäß einer weiteren Alternative kann die radikalisch härtbare ungesättigte Verbindung auch eine Mischung aus mindestens einem Reaktionsharz und mindestens einem Reaktivverdünner, eine Reaktionsharzmischung, umfassen.

### Radikalisch härtbare, ethylenisch ungesättigte Verbindung

Geeignete radikalisch härtbare ungesättigte Verbindungen als Reaktionsharz sind ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Besonders bevorzugt ist die radikalisch härtbare, ethylenisch ungesättigte Verbindung, das Reaktionsharz, eine Verbindung auf Urethan(meth)acrylatbasis, Epoxy(meth)acrylatbasis, ein Methacrylat eines alkoxylierten Bisphenols oder auf Basis weiterer ethylenisch ungesättigter Verbindungen.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1, WO 02/051903 A1 und WO 10/108939 A1 beschrieben sind. Vinylesterharze (synonym: (Meth)acrylatharze) sind dabei aufgrund ihrer hydrolytischen Beständigkeit und ausgezeichneten mechanischen Eigenschaften am stärksten bevorzugt. Ganz besonders bevorzugt sind Vinylesterurethanharze, insbesondere Urethanmethacrylate. Zu diesen zählen als bevorzugte Harze die in der DE 10 2011 017 626 B4 beschriebenen Urethanmethacrylatharze. Diesbezüglich wird auf die DE 10 2011 017 626 B4, und vor allem auf die Beschreibung der Zusammensetzung dieser Harze, insbesondere in den Beispielen der DE 10 2011 017 626 B4, verwiesen.

Beispiele geeigneter ungesättiger Polyester, die erfindungsgemäß verwendet werden können, werden in folgende Kategorien eingeteilt, wie sie durch M. Malik et al. in J. M. S. - Rev. Macromol. Chem. Phys., C40 (2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, und gegebenfalls mit einem Kettenverlängerer, wie etwa Diethylenglykol oder Dipropylenglykol, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden. Ganz besonders geeignet und bevorzugt sind die in der DE 102011017 626 B4 beschriebenen Urethanmethacrylatharze (die auch als Vinylesterurethanharze bezeichnet werden).

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist.

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, und Neopentylglykolmono(meth)acrylat geeignet. Bevorzugt sind Acryl- bzw. Methacrylsäurehydroxyalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen. Acrylsäure ist wegen ihrer geringeren Alkalistabilität weniger bevorzugt als am Kohlenwasserstoffrest substituierte Acrylsäuren.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglykol, Propandiol, Dipropylenglykol, andere Diole, wie 1,4-Butandiol, 1,6-Hexandiol, Neopentylglykol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Reaktionsharze, die erfindungsgemäß als radikalisch härtbare ungesättigte Verbindungen verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Reaktionsharz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

In einer Ausführungsform enthält die Harzkomponente des Reaktionsharzsystems zusätzlich zu dem Reaktionsharz mindestens eine weitere niederviskose, radikalisch polymerisierbare, ethylenisch ungesättigte Verbindung als Reaktivverdünner. Diese wird zweckmäßig zu dem Reaktionsharz gegeben und ist daher in der Harzkomponente enthalten.

Geeignete, insbesondere niederviskose, radikalisch härtbare, ethylenisch ungesättigte Verbindungen als Reaktivverdünner sind in den Anmeldungen EP 1935860 A1 und DE 19531649 A1 beschrieben. Vorzugsweise enthält das Reaktionsharzsystem als Reaktivverdünner einen (Meth)acrylsäureester, wobei besonders bevorzugt (Meth)acrylsäureester ausgewählt werden aus der Gruppe bestehend aus Hydroxypropyl(meth)acrylat, Propandiol-1,3-di(meth)acrylat, Butandiol-1,2-di(meth)acrylat, Trimethylolpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, Butandiol-1,4-di(meth)acrylat, Butandiol-1,3-di(meth)acrylat, Hexandiol-1,6-di(meth)acrylat, Acetoacetoxyethyl(meth)acrylat, Ethandiol-1,2-di(meth)acrylat, Isobornyl(meth)acrylat, Di-, Tri- oder Oligo ethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)-acrylat, Isobornyl(meth)acrylat und Decalyl-2-(meth)acrylat. Biogene Reaktivverdünner wie Tetrahydrofurfuryl(meth)acrylat, Isobornyl(meth)acrylat oder Isosorbiddi(meth)acrylat sind bevorzugt.

Der Reaktivverdünner kann allein oder als Mischung aus zwei oder mehreren Reaktivverdünnern eingesetzt werden.

Grundsätzlich können auch andere übliche radikalisch polymerisierbaren Verbindungen, allein oder im Gemisch mit den im vorhergehenden Absatz beschriebenen (Meth)acrylsäureestern, eingesetzt werden, z.B. Styrol, α-Methylstyrol, alkylierte Styrole, wie tert-Butylstyrol, Divinylbenzol und Vinyl- sowie Allylverbindungen. Beispiele für derartige Vinyl- oder Allylverbindungen sind Hydroxybutylvinylether, Ethylenglykoldivinylether, 1,4-Butandioldivinylether, Trimethylolpropandivinylether, Trimethylolpropantrivinylether, Mono-, Di-, Tri-, Tetra- und Polyalkylenglykolvinylether, Mono-, Di-, Tri-, Tetra- und Polyalkylenglykolallylether, Adipinsäuredivinylester, Trimethylolpropandiallylether und Trimethylolpropantriallylether.

Besonders bevorzugte Reaktivverdünner sind die in den Beispielen verwendeten Reaktivverdünner.

Als radikalisch härtbare Verbindungen können auch Verbindungen verwendet werden, die verschiedene reaktive bzw. funktionelle Gruppen aufweisen. Diese können beispielsweise beide ethylenisch ungesättigt sein, wie beispielsweise (Meth)acrylate mit einer zusätzlichen Allyletherfunktion. Aber Verbindungen mit zwei unterschiedlichen reaktiven/funktionellen Gruppen, die mit unterschiedlichem Reaktionsmechanismus reagieren, können verwendet werden. Beispiel dafür sind (Meth)acrylate mit einer Silan- oder Siloxangruppe, wie z.B. 3-Trimethoxysilylpropylmethacrylat. Es können auch Verbindungen mit mehr als zwei reaktiven/funktionellen Gruppen verwendet werden.

Die radikalisch härtbare ungesättigte Verbindung kann in einer Menge von 10 bis 99,99 Gew.-%, bevorzugt 15 bis 97 Gew.-%, besonders bevorzugt 30 bis 95 Gew.-%, bezogen auf die Harzkomponente, in dem Reaktionsharzsystem enthalten sein. Hierbei kann die radikalisch hätbare Verbindung entweder ein Reaktionsharz auf Basis eine radikalisch härtbaren Verbindung oder ein Reaktivverdünner oder eine Mischung eines Reaktionsharzes mit ein, zwei oder mehreren Reaktivverdünnern sein.

Für den Fall, dass die radikalisch härtbare ungesättigte Verbindung eine Reaktionsharzmischung ist, so entspricht die Menge der Mischung, die in dem Reaktionsharzsystem enthalten sein kann, der Menge der radikalisch härtbaren Verbindung, nämlich von 10 bis 99,99 Gew.-%, bevorzugt 15 bis 97 Gew.-%, besonders bevorzugt 30 bis 95 Gew.-%, bezogen auf die Harzkomponente, wobei, bezogen auf die Reaktionsharzmischung, der Anteil des Reaktionsharzes 0 bis 100 Gew.-%, bevorzugt 30 bis 70 Gew.-% und der Anteil des Reaktivverdünners oder einer Mischung aus mehreren Reaktivverdünnern 0 bis 100 Gew.-%, bevorzugt 30 bis 70 Gew.-% beträgt.

Die Gesamtmenge der radikalisch härtbaren Verbindung hängt von dem Füllgrad, also der Menge der anorganischen Füllstoffe, einschließlich der nachfolgend aufgeführten Füllstoffe, insbesondere die hydrophilen Füllstoffe, die weiteren anorganischen Zuschlagstoffe und die hydraulisch abbindenden bzw. polykondensierbaren Verbindungen.

### Beschleuniger

In einer weiteren Ausführungsform enthält das Reaktionsharzsystem des Weiteren mindestens einen Beschleuniger. Hierdurch wird die Härtungsreaktion beschleunigt.

Geeignete Beschleuniger sind dem Fachmann bekannt. Diese sind zweckmäßig Amine.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl(2-chloroethyl)amin, 2-Ethylhexylamin, Bis(2-chloroethyl)amin, 2-Ethylhexylamin, Bis(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis(2-hydroxyethyl)oleylamin, Tris-[2-(2-hydroxy-ethoxy)-ethyl]amin, 3-Amino-1-propanol, Methyl(3-aminopropyl)ether, Ethyl-(3-aminopropyl)ether, 1,4-Butandiol-bis(3-aminopropyl)ether, 3-Dimethylamino-1-propanol, 1-Amino-2-propanol, 1-Diethylamino-2-propanol, Diisopropanolamin, Methyl-bis(2-hydroxypropyl)amin, Tris(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind symmetrisch oder asymmetrisch substituierten Anilin- und Toluidin-Derivate und N,N-Bis(hydroxy)alkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin, N-Methyl-N-hydroxyethyl-p-toluidin, N-Ethyl-N-hydroxyethyl-p-toluidin sowie die analogen o- oder m-Toluidine und 4,4'-Bis(dimethylamino)diphenylmethan und/oder die Leucoformen der Farbstoffe Kristallviolett oder Malachitgrün.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Bevorzugte Beschleuniger sind N,N-Bis(2-hydroxypropyl)toluidine, N,N-Bis(2-hydroxyethyl)toluidine und para-Toluidin Ethoxylat (Bisomer® PTE).

Der Beschleuniger kann in einer Menge von 0,01 bis 10 Gew.-%, bevorzugt 0,5 bis 5 Gew.-%, besonders bevorzugt 0,5 bis 3 Gew.-%, bezogen auf die Harzkomponente, in den Reaktionsharzsystem enthalten sein.

### Inhibitoren

In einer noch weiteren Ausführungsform enthält die Harzkomponente des Weiteren einen Inhibitor sowohl für die Lagerstabilität des Reaktionsharzes und der Harzkomponente als auch zur Einstellung der Gelzeit. Der Inhibitor kann allein oder zusammen mit dem Beschleuniger in dem Reaktionsharzsystem enthalten sein. Bevorzugt wird zur Einstellung der Verarbeitungszeit bzw. Gelzeit eine entsprechend aufeinander abgestimmte Beschleuniger-Inhibitor-Kombination eingesetzt.

Als Inhibitoren sind die für radikalisch polymerisierbare Verbindungen üblicherweise verwendeten Inhibitoren geeignet, wie sie dem Fachmann bekannt sind. Bevorzugt sind die Inhibitoren unter phenolischen Verbindungen und nicht-phenolischen Verbindungen, wie stabilen Radikalen und/oder Phenothiazinen, ausgewählt.

Als phenolische Inhibitoren sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet.

Als nicht-phenolische oder anaerobe, d.h. im Gegensatz zu den phenolischen Inhibitoren auch ohne Sauerstoff wirksame Inhibitoren kommen vorzugsweise Phenothiazine, wie Phenothiazin und/oder Derivate oder Kombinationen davon, oder stabile organische Radikale, wie Galvinoxyl- und N-oxyl-Radikale in Betracht.

Als N-Oxyl-Radikale können beispielsweise solche verwendet werden, wie sie in der DE 199 56 509 beschrieben sind. Geeignete stabile N-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-Oxyl Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Diese Verbindungen sind besonders deshalb sinnvoll und meist erforderlich, da sonst die anzustrebende Lagerstabilität von vorzugsweise mehr als 3 Monaten, insbesondere 6 Monaten oder mehr, nicht erreicht werden kann. Die UV- und insbesondere die Lagerstabilität können so beträchtlich erhöht werden.

Ferner können in para-Stellung zur Hydroxylgruppe substituierte Pyrimidinol- oder Pyridinol-Verbindungen, wie sie in der Patentschrift DE 10 2011 077 248 B1 beschrieben sind, als Inhibitoren eingesetzt werden.

Bevorzugte Inhibitoren sind 1-Oxyl-2,2,6,6-tetramethylpiperidin (TEMPO) und 1-Oxyl-2,2,6,6-tetramethylpiperidin-4-ol (TEMPOL), Katechole, besonders bevorzugt *tert*-ButylBrenzkatechin und Brenzkatechin, BHT und Phenothiazin.

Die Inhibitoren können, abhängig von den gewünschten Eigenschaften des Reaktionsharzsystems, entweder allein oder als Kombination von zweien oder mehreren davon verwendet werden. Die Kombination der phenolischen und der nicht-phenolischen Inhibitoren ermöglicht dabei einen synergistischen Effekt, wie auch die Einstellung einer im Wesentlichen driftfreien Einstellung der Gelzeit der Reaktionsharz-Zusammensetzung zeigt.

Der Inhibitor kann in einer Menge von 0,001 bis 5 Gew.-%, bevorzugt 0,01 bis 3 Gew.-%, besonders bevorzugt 0,05 bis 1 Gew.-%, bezogen auf die Harzkomponente, in den Reaktionsharzsystem enthalten sein. Sind mehrere Inhibitoren enthalten, so entspricht die eben genannte Menge der Gesamtmenge an Inhibitoren.

### Weitere Zusatzstoffe

Gemäß einer Ausführungsform enthält die Harzkomponente anorganische Zusatstoffe, wie Füllstoffe und/oder weitere Zusätze.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerde- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Teilchen haben vorzugsweise einen maximalen Durchmesser von 10 mm. Bevorzugt und deutlicher verstärkend wirken sich jedoch die globulären, inerten Stoffe (Kugelform) aus.

Füllstoffe liegen in der Harzkomponente vorzugsweise in einer Menge von 20 bis zu 90, insbesondere 40 bis 80, vor allem 50 bis 80 Gew.-% vorhanden.

Weitere denkbare Zusätze sind ferner Rheologieadditive, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Ferner können Mittel zur Regulierung des pH-Wertes, wie anorganische und/oder organische Säuren gemäß DE102010008971A1, insbesondere Copolymere mit sauren Gruppen, z.B. Estern der Phosphorsäure, eingesetzt werden. Auch nicht reaktive Verdünnungsmittel (Lösungsmittel) können, vorzugsweise in einer Menge bis zu 30 Gew.-%, bezogen auf die jeweilige Komponente (Reaktionsharzmörtel, Härter), beispielsweise von 1 bis 20 Gew.-%, vorliegen, wie Niederalkylketone, z.B. Aceton, Diniederalkylniederalkanoylamide, wie Dimethylacetamid, Niederalkylbenzole, wie Xylole oder Toluol, Phthalsäureester oder Paraffine, oder Wasser. Darüber hinaus können auch Mittel zur Verbesserung der Verträglichkeit zwischen Harz- und Härterkomponente, wie ionische, nichtionische oder amphotere Tenside; Seifen, Netzmittel, Detergenzien; Polyalkylenglykolether; Salze von Fettsäuren, Mono- oder Diglyceride von Fettsäuren, Zuckerglyceride, Lecithin; Alkansulfonate, Alkylbenzolsulfonate, Fettalkoholsulfate, Fettalkoholpolyglykolether, Fettalkoholethersulfate, sulfonierte Fettsäuremethylester; Fettalkoholcarboxylate; Alkylpolyglycoside, Sorbitanester, N-Methylglucamide, Saccharoseester; Alkylphenole, Alkylphenolpolyglykolether, Alkylphenolcarboxylate; quartäre Ammoniumverbindungen, Esterquats, Carboxylate quartärer Ammoniumverbindungen, verwendet werden.

Bei einer Ausführungsform der Erfindung enthält die Harzkomponente neben der vorhandenen radikalisch härtbaren Verbindung zusätzlich noch eine hydraulisch abbindende oder polykondensierbare anorganische Verbindung, insbesondere Zement. Derartige Hybridmörtelsysteme sind ausführlich in DE 4231161 A1 beschrieben. Dabei enthält die Harzkomponente vorzugsweise als hydraulisch abbindende oder polykondensierbare anorganische Verbindung Zement, beispielsweise Portlandzement oder Aluminatzement, wobei übergangsmetalloxidfreie oder übergangsmetallarme Zemente besonders bevorzugt sind. Als hydraulisch abbindende anorganische Verbindung kann auch Gips als solcher oder in Mischung mit dem Zement eingesetzt werden. Die Harzkomponente kann als polykondensierbare anorganische Verbindung auch silikatische, polykondensierbare Verbindungen, insbesondere lösliches, gelöstes und/oder amorphes Siliziumdioxid enthaltende Stoffe wie z.B. pyrogene Kieselsäure umfassen.

Die hydraulisch abbindende oder polykondensierbare Verbindung kann in einer Menge von 0 bis 40 Gew.-%, bevorzugt 5 bis 30 Gew.-%, besonders bevorzugt 10 bis 30 Gew.-%, bezogen auf die Harzkomponente, in dem Reaktionsharzsystem enthalten sein. Sind hydraulisch abbindende oder polykondensierbare Verbindungen in dem Reaktionssystem enthalten, so liegt die Gesamtmenge an Füllstoffen im oben genannten bereich. Dementsprechend beträgt die Gesamtmenge an Füllstoffen, einschließlich der hydraulisch abbindenden und polykondensierbaren Verbindungen 20 bis zu 90, insbesondere 40 bis 80, vor allem 50 bis 80 Gew.-%, bezogen auf die Harzkomponente.

### Bevorzugte Ausführungsformen

In den folgenden beschriebenen Ausführungsformen beziehen sich die Mengenangaben (Gew.-%) jeweils auf die einzelnen Komponenten, also die Harzkomponente und die Härterkomponente, sofern nichts anderes angegeben ist. Die tatsächlichen Mengen sind derart, dass sich die Gew.-% auf der jeweiligen Komponente auf 100 addieren.

In einer ersten bevorzugten Ausführungsform der erfindungsgemäßen Härterzusammensetzung enthält diese:
- mindestens ein Peroxid als Härtungsmittel,
- Wasser und
- eine Füllstoffmischung aus einem ersten Füllstoff FS1 mit einer ersten mittleren Korngröße d_{50,1} zwischen 16 und 130 µm und einem zweiten Füllstoff FS2 mit einer zweiten mittleren Korngröße d_{50,2} zwischen 0,16 und 16 µm, wobei das Verhältnis d_{50,1} zu d_{50,2} (d_{50,1} : d_{50,2}) im Bereich von 8:1 bis 100:1 liegt.

In einem bevorzugten Aspekt dieser ersten Ausführungsform ist das Peroxid fest und in dem Wasser suspendiert.

In einer zweiten bevorzugten Ausführungsform der erfindungsgemäßen Härterzusammensetzung enthält diese:
- mindestens ein Peroxid als Härtungsmittel,
- Wasser und
- eine Füllstoffmischung aus einem ersten Füllstoff FS1 mit einer ersten mittleren Korngröße d_{50,1} zwischen 16 und 130 µm und einem zweiten Füllstoff FS2 mit einer zweiten mittleren Korngröße d_{50,2} zwischen 0,16 und 16 µm,
   wobei das Verhältnis d_{50,1} zu d_{50,2} (d_{50,1} : d_{50,2}) im Bereich von 8:1 bis 100:1 liegt und wobei die Füllstoffe aus der Gruppe ausgewählt sind, bestehend aus Metalloxiden, Halbmetalloxiden, Metallhydroxiden, Metallsalzen, mineralischen oder mineralähnlichen Füllstoffen, hydraulisch härtbaren Füllstoffen, Metallen, Ruß und polymeren Füllstoffen, bevorzugt Metalloxiden, Metallhydroxiden und Metallsalzen.

In einem bevorzugten Aspekt dieser zweiten Ausführungsform ist das Peroxid fest und in dem Wasser suspendiert.

In einer dritten bevorzugten Ausführungsform der erfindungsgemäßen Härterzusammensetzung enthält diese:
- mindestens ein festes Peroxid als Härtungsmittel,
- Wasser,
- eine Füllstoffmischung aus einem ersten Füllstoff FS1 mit einer ersten mittleren Korngröße d_{50,1} zwischen 16 und 130 µm und einem zweiten Füllstoff FS2 mit einer zweiten mittleren Korngröße d_{50,2} zwischen 0,16 und 16 µm,
   wobei das Verhältnis d_{50,1} zu d_{50,2} (d_{50,1} : d_{50,2}) im Bereich von 8:1 bis 100:1 liegt und die Füllstoffe aus der Gruppe ausgewählt sind, bestehend aus Metalloxiden, Metallhydroxiden und Metallsalzen, und
- anorganische und/oder organische Additive.

In einem bevorzugten Aspekt dieser dritten Ausführungsform ist das Peroxid in dem Wasser suspendiert.

In einer vierten bevorzugten Ausführungsform der erfindungsgemäßen Härterzusammensetzung enthält diese:
- ein festes Peroxid als Härtungsmittel,
- Wasser,
- eine Füllstoffmischung aus einem ersten Füllstoff FS1 mit einer ersten mittleren Korngröße d_{50,1} zwischen 16 und 130 µm und einem zweiten Füllstoff FS2 mit einer zweiten mittleren Korngröße d_{50,2} zwischen 0,16 und 16 µm,
   wobei das Verhältnis d_{50,1} zu d_{50,2} (d_{50,1} : d_{50,2}) im Bereich von 8:1 bis 100:1 liegt und die Füllstoffe aus der Gruppe ausgewählt sind, bestehend aus Metalloxiden, Metallhydroxiden und Metallsalzen und das Volumenverhältnis von erstem Füllstoff zu zweiten Füllstoff (V_{FS1} : V_{FS2}) im Bereich von 1,5:1 bis 15:1, bevorzugt 2:1 bis 10:1 und stärker bevorzugt 2,5:1 bis 5:1 liegt, und
- anorganische und/oder organische Additive.

In einem bevorzugten Aspekt dieser vierten Ausführungsform ist das Peroxid in dem Wasser suspendiert.

In einer fünften bevorzugten Ausführungsform der erfindungsgemäßen Härterzusammensetzung enthält diese:
- ein festes Peroxid,
- Wasser,
- eine Füllstoffmischung aus einem ersten Füllstoff FS1 mit einer ersten mittleren Korngröße d_{50,1} zwischen 16 und 130 µm und einem zweiten Füllstoff FS2 mit einer zweiten mittleren Korngröße d_{50,2} zwischen 0,16 und 16 µm,
   wobei
   ∘ das Verhältnis d_{50,1} zu d_{50,2} (d_{50,1} : d_{50,2}) im Bereich von 8:1 bis 100:1 liegt,
   ∘ die Füllstoffe aus der Gruppe ausgewählt sind, bestehend aus Metalloxiden, Metallhydroxiden und Metallsalzen,
   ∘ das Volumenverhältnis von erstem Füllstoff zu zweiten Füllstoff (V_{FS1} : V_{FS2}) im Bereich von 2,5:1 bis 5:1 liegt,
   ∘ der Grenzfüllgrad zwischen 55 bis 75 Vol.-% liegt, und
- anorganische und/oder organische Additive.

In einem bevorzugten Aspekt dieser fünften Ausführungsform ist das Peroxid in dem Wasser suspendiert.

Die erfindungsgemäße Härterzusammensetzung eignet sich insbesondere als Härterkomponente für ein zweikomponentiges Reaktionsharz-System für die chemische Befestigung mit einer Harzkomponente und einer Härterkomponente. Bevorzugte Ausführungsformen eines derartigen zweikomponentigen Reaktionsharz-Systems sind nachfolgend beschrieben.

In einer bevorzugten ersten Ausführungsform eines Reaktionsharz-Systems enthält die Harzkomponente:
- mindestens eine radikalisch härtbare, ethylenisch ungesättigte Verbindung und
- mindestens einen anorganischen Füllstoff,
und die Härterkomponente enthält:
- mindestens ein Peroxid als Härtungsmittel,
- Wasser und
- eine Füllstoffmischung aus einem ersten Füllstoff FS1 mit einer ersten mittleren Korngröße d_{50,1} zwischen 16 und 130 µm und einem zweiten Füllstoff FS2 mit einer zweiten mittleren Korngröße d_{50,2} zwischen 0,16 und 16 µm, wobei das Verhältnis d_{50,1} zu d_{50,2} (d_{50,1} : d_{50,2}) im Bereich von 8:1 bis 100:1 liegt.

In einem bevorzugten Aspekt dieser ersten Ausführungsform eines Reaktionsharz-Systems ist das Peroxid in dem Wasser suspendiert. In einem weiter bevorzugten Aspekt dieser ersten Ausführungsform eines Reaktionsharz-Systems enthält die Harzkomponente:
- 10 bis 99,99 Gew.-%, bevorzugt 15 bis 97 Gew.-%, besonders bevorzugt 30 bis 95 Gew.-% der mindestens einen radikalisch härtbaren Verbindung, und
- 0,01 bis 90 Gew.-%, bevorzugt 3 bis 85 Gew.-%, besonders bevorzugt 5 bis 70 Gew.-% des mindestens einen anorganischen Füllstoffs,
und die Härterkomponente enthält:
- den ersten Füllstoff FS1 ersten Füllstoff FS1 mit einer ersten mittleren Korngröße d_{50,1} und den zweiten Füllstoff FS2 mit einer zweiten mittleren Korngröße d_{50,2} in einem Volumenverhältnis von erstem Füllstoff zu zweiten Füllstoff (V_{FS1} : V_{FS2}) im Bereich von 1,5:1 bis 15:1,
- 0,25 bis 5 Gew.-%, bevorzugt 1 bis 30 Gew.-%, besonders bevorzugt 5 bis 25 Gew.-% des mindestens einen Peroxids, und
- 10 bis 30 Gew.-%, bevorzugt 10 bis 25 Gew.-%, besonders bevorzugt 15 bis 25 Gew.-% Wasser.

In einer weiteren, zweiten bevorzugten Ausführungsform des Reaktionsharz-Systems enthält die Harzkomponente:
- eine Reaktionsharzmischung aus mindestens einem Reaktionsharz und einem Reaktivverdünner als radikalisch härtbare Verbindung;
- mindestens einen anorganischen Füllstoff,
- mindestens einen Beschleuniger, und
- mindestens einen Inhibitor,
und die Härterkomponente enthält:
- mindestens ein Peroxid als Härtungsmittel,
- Wasser und
- eine Füllstoffmischung aus einem ersten Füllstoff FS1 mit einer ersten mittleren Korngröße d_{50,1} zwischen 16 und 130 µm und einem zweiten Füllstoff FS2 mit einer zweiten mittleren Korngröße d_{50,2} zwischen 0,16 und 16 µm, wobei das Verhältnis d_{50,1} zu d_{50,2} (d_{50,1} : d_{50,2}) im Bereich von 8:1 bis 100:1 liegt.

In einem bevorzugten Aspekt dieser zweiten Ausführungsform des Reaktionsharz-Systems ist das Peroxid in dem Wasser suspendiert. In einem weiteren bevorzugten Aspekt dieser zweiten Ausführungsform des Reaktionsharz-Systems enthält die Harzkomponente:
- 10 bis 99,99 Gew.-%, bevorzugt 15 bis 97 Gew.-%, besonders bevorzugt 30 bis 95 Gew.-% einer Mischung, der Reaktionsharzmischung, aus 0 bis 100 Gew.-%, bevorzugt 30 bis 70 Gew.-%, bezogen auf das Gesamtgewicht der Mischung, des mindestens einen Reaktionsharzes und 100 bis 0 Gew.-%, bevorzugt 70 bis 30 Gew.-%, bezogen auf das Gesamtgewicht der Mischung, des mindestens einen Reaktivverdünners als radikalisch härtbare Verbindung, und
- 0,01 bis 15 Gew.-%, bevorzugt 0,1 bis 10 Gew.-%, besonders bevorzugt 1 bis 7 Gew.-% des mindestens einen anorganischen Füllstoffs,
- 0,01 bis 10 Gew.-%, bevorzugt 0,5 bis 5 Gew.-%, weiter bevorzugt 1 bis 3 Gew.-% des mindestens einen Beschleunigers und
- 0,001 bis 5 Gew.-%, bevorzugt 0,01 bis 3 Gew.-%, weiter bevorzugt 0,1 bis 1 Gew.-% des mindestens einen Inhibitors,
und die Härterkomponente enthält:
- den ersten Füllstoff FS1 ersten Füllstoff FS1 mit einer ersten mittleren Korngröße d_{50,1} und den zweiten Füllstoff FS2 mit einer ersten mittleren Korngröße d_{50,2} in einem Volumenverhältnis von erstem Füllstoff zu zweiten Füllstoff (V_{FS1} : V_{FS2}) im Bereich von 1,5:1 bis 15:1,
- 0,25 bis 5 Gew.-%, bevorzugt 1 bis 30 Gew.-%, besonders bevorzugt 5 bis 25 Gew.-% des mindestens einen Peroxids, und
- 10 bis 30 Gew.-%, bevorzugt 10 bis 25 Gew.-%, besonders bevorzugt 15 bis 25 Gew.-% Wasser.

In einer besonders bevorzugten, dritten Ausführungsform des Reaktionsharz-Systems enthält die Harzkomponente:
- eine Reaktionsharzmischung aus mindestens einem Reaktionsharz auf Urethan(meth)acrylatbasis und mindestens einem Reaktivverdünner auf (Meth)acrylatbasis, als radikalisch härtbare Verbindung,
- mindestens einen anorganischen Füllstoff, insbesondere eine Kieselsäure,
- mindestens einen Beschleuniger und
- mindestens einen Inhibitor,
und die Härterkomponente enthält:
- mindestens ein Peroxid, insbesondere ein Diacylperoxid,
- Wasser,
- eine Füllstoffmischung aus einem ersten Füllstoff FS1 mit einer ersten mittleren Korngröße d_{50,1} zwischen 16 und 130 µm und einem zweiten Füllstoff FS2 mit einer zweiten mittleren Korngröße d_{50,2} zwischen 0,16 und 16 µm, wobei das Verhältnis d_{50,1} zu d_{50,2} (d_{50,1} : d_{50,2}) im Bereich von 8:1 bis 100:1 liegt, und
- weitere anorganische und/oder organische Additive.

In einem bevorzugten Aspekt dieser dritten Ausführungsform des Reaktionsharz-Systems ist das Peroxid in dem Wasser suspendiert. In einem weiter bevorzugten Aspekt dieser dritten Ausführungsform des Reaktionsharz-Systems beinhaltet das Reaktionsharzsystem die Bestandteile in den in dem zweiten Aspekt angeführten Mengen.

In einer ganz besonders bevorzugten, vierten Ausführungsform enthält die Harzkomponente:
- eine Reaktionsharzmischung aus mindestens einem Reaktionsharz auf Urethan(meth)acrylatbasis und mindestens einem Reaktivverdünner auf (Meth)acrylatbasis, als radikalisch härtbare Verbindung,
- mindestens einen anorganischen Füllstoff, insbesondere pyrogene Kieselsäure,
- mindestens eine hydraulisch abbindende oder polykondensierbare Verbindung, insbesondere Zement,
- mindestens einen Beschleuniger und
- mindestens einen Inhibitor,
und die Härterkomponente enthält:
- mindestens ein Peroxid, insbesondere Dibenzoylperoxid,
- Wasser,
- eine Füllstoffmischung aus einem ersten Füllstoff FS1 mit einer ersten mittleren Korngröße d_{50,1} zwischen 16 und 130 µm und einem zweiten Füllstoff FS2 mit einer zweiten mittleren Korngröße d_{50,2} zwischen 0,16 und 16 µm, wobei das Verhältnis d_{50,1} zu d_{50,2} (d_{50,1} : d_{50,2}) im Bereich von 8:1 bis 100:1 liegt, und
- weitere anorganische und/oder organische Additive.

In einem bevorzugten Aspekt dieser vierten Ausführungsform des Reaktionsharz-Systems ist das Peroxid in dem Wasser suspendiert. In einem weiteren bevorzugten Aspekt dieser vierten Ausführungsform des Reaktionsharz-Systems enthält die Harzkomponente:
- 10 bis 99,99 Gew.-%, bevorzugt 15 bis 97 Gew.-%, besonders bevorzugt 30 bis 95 Gew.-% einer Mischung, der Reaktionsharzmischung, aus 0 bis 100 Gew.-%, bevorzugt 30 bis 70 Gew.-%, bezogen auf das Gesamtgewicht der Mischung, des mindestens einen Reaktionsharzes und 100 bis 0 Gew.-%, bevorzugt 70 bis 30 Gew.-%, bezogen auf das Gesamtgewicht der Mischung, des mindestens einen Reaktivverdünners als radikalisch härtbare Verbindung, und
- 0,01 bis 15 Gew.-%, bevorzugt 0,1 bis 10 Gew.-%, besonders bevorzugt 1 bis 7 Gew.-% des mindestens einen anorganischen Füllstoffs,
- 0 bis 40 Gew.-%, bevorzugt 5 bis 30 Gew.-% der hydraulisch abbindenden oder polykondensierbaren Verbindung, wobei die Gesamtmenge an Füllstoffen, einschließlich der hydraulisch abbindenden oder polykondensierbaren Verbindung 20 bis zu 90 Gew.-%, bevorzugt 40 bis 80 Gew.-% besonders bevorzugt 50 bis 80 Gew.-%, bezogen auf den Harzkomponenten, beträgt,
- 0,01 bis 10 Gew.-%, bevorzugt 0,5 bis 5 Gew.-%, weiter bevorzugt 1 bis 3 Gew.-% des mindestens einen Beschleunigers und
- 0,001 bis 5 Gew.-%, bevorzugt 0,01 bis 3 Gew.-%, weiter bevorzugt 0,1 bis 1 Gew.-% des mindestens einen Inhibitors,
und die Härterkomponente enthält:
- den ersten Füllstoff FS1 ersten Füllstoff FS1 mit einer ersten mittleren Korngröße d_{50,1} und den zweiten Füllstoff FS2 mit einer ersten mittleren Korngröße d_{50,2} in einem Volumenverhältnis von erstem Füllstoff zu zweiten Füllstoff (V_{FS1} : V_{FS2}) im Bereich von 1,5:1 bis 15:1,
- 0,25 bis 5 Gew.-%, bevorzugt 1 bis 30 Gew.-%, besonders bevorzugt 5 bis 25 Gew.-% des mindestens einen Peroxids, und
- 10 bis 30 Gew.-%, bevorzugt 10 bis 25 Gew.-%, besonders bevorzugt 15 bis 25 Gew.-% Wasser.

### AUSFÜHRUNGSBEISPIELE

### Liste der in den Beispielen und Referenzen verwendeten Bestandteile (Erklärung der Abkürzungen) sowie ihrer Handelsnamen und Bezugsquellen:

| **Rohstoff** | **Bemerkung** | | | **Fa.** |
|---|---|---|---|---|
| Perkadox® L-W40 | Dibenzoylperoxid 40%, Suspension in Wasser (CAS-Nummer 94-36-0) | | | Akzo Nobel Chemicals B.V. |
| BP-40-SAQ | Dibenzoylperoxid 40%, Suspension in Wasser, ungepuffert (CAS-Nummer 94-36-0) | | | United Initiators |
| Luperox® EZ-FLO | Dibenzoylperoxid ca. 40%; Suspension in Wasser (CAS-Nummer 94-36-0) | | | Arkema |
| Benox® B-50 | Dibenzolyperoxid 50% in Benzoat (CAS-Nummer 94-36-0) | | | United Initiators |
| Peroxan BP-40 WS | Dibenzoylperoxid ca. 40%; Suspension in Wasser (CAS-Nummer 94-36-0) | | | Pergan |
| Trigonox® C | *tert*-Butylperoxybenzoat (99%, flüssig), (CAS-Nummer 614-45-9) | | | Akzo Nobel Functional Chemicals LLC |
| LP-40-SAQ | Dilauroylperoxid 40%, Suspension in Wasser (CAS-Nummer 105-74-8) | | | United Initiators |
| Wasser | deionisiert | | | |
| Diethyladipat | | | | Sigma-Aldrich |
| Kaliumdihydrogenphosphat | wasserfrei | | | Sigma-Aldrich |
| Dinatriumhydrogencitrat | wasserfrei | | | Sigma-Aldrich |
| Glycerol | | | | Sigma-Aldrich |
| Aerosil® 200 | hydrophile, pyrogene Kieselsäure; (CAS Nummer: 112945-52-5; spez. Oberfläche 200m²/g; mittlere Teilchengröße 0,2-0,3 µm (Aggregate)) | | | Evonik |
| CAB-O-SIL® TS720 | Hydrophobe PDMS-beschichtete, pyrogene Kieselsäure | | | Cabot |
| OPTIGEL-CK | aktiviertes Schichtsilikat (Bentonit); (spez. Dichte 2,6 g/cm³, Schüttdichte 550-750 kg/m³, Feuchtigkeitsgehalt 10 % ± 2 %) | | | BYK-Chemie GmbH |
| Axilat RH23 | Xanthangummi; Viskosität (1% sol. in 1% KCL (Brookfield LVT III/60 U/min) 1200-1800 mPas; pH 6-8; Feinpulver (CAS-Nummer) | | | Synthomer |
| Natriumhydroxid | | | | Sigma-Aldrich |
| Natriumbenzolsulfonat | | | | TCI Europe |

| **Füllstoff** | **d50 [µm]** | **spez. Gewicht [g/cm³] ¹⁾** | **Hauptbestandteil** | **Fa.** |
|---|---|---|---|---|
| OMYACARB® 130AL | 130 | 2,6 | Kalziumcarbonat | Omya GmbH |
| MILLISIL® W3 | 90 | 2,65 | Quarzsand | Quarzwerke GmbH |
| Apyral® 1E | 50 | 2,4 | Aluminiumhydroxid | Nabaltec AG |
| MILLISIL® W6 | 40 | 2,65 | Quarzsand | Quarzwerke GmbH |
| OMYACARB® 40AL | 31 | 2,6 | Kalziumcarbonat | Omya GmbH |
| MILLISIL® W12 | 16 | 2,65 | Quarzsand | Quarzwerke GmbH |
| Edelkorund 800 | 6,5 | 3,9 | Aluminiumoxid | Cerablast GmbH & Co. KG |
| Durcal 5 | 6 | 3,6 | Kalziumcarbonat | Omya GmbH |
| Albawhite 40 | 5 | 4,4 | Weißspat | Sachtleben Minerals GmbH & Co. KG |
| OMYACARB® 2AL | 3,2 | 2,6 | Kalziumcarbonat | Omya GmbH |
| Albawhite 70 | 3 | 4,4 | Weißspat | Sachtleben Minerals GmbH & Co. KG |
| KaMin 80 | 2,3 | 2,6 | Kaolin | KaMin Performance Minerals |
| Albawhite 80 | 2 | 4,4 | Weißspat | Sachtleben Minerals GmbH & Co. KG |
| SF800 | 2 | 2,65 | Quarz, Feinstmehl | Quarzwerke GmbH |
| Albawhite 90 | 1,2 | 4,4 | Weißspat | Sachtleben Minerals GmbH & Co. KG |
| Apyral® 60CD | 1 | 2,4 | Aluminiumhydroxid | Nabaltec AG |
| BLANC FIXE® F | 1 | 4,4 | Synth. Bariumsulfat | Solvay & CPC GmbH & Co KG |
| RG4000 | 0,6 | 3,9 | monomodales alpha-Aluminiumoxid | Almatis B.V. |
| SILMIKRON® 795-10/1 | 0,5 | 2,65 | Quarz, Ultrafeinstmehl | Quarzwerke GmbH |
| VP1171-850 | 0,3 | 2 | Quarzgut | Quarzwerke GmbH |
| SACHTOPERSE® HU-N | 0,04 | 4,4 | synth. Bariumsulfat | Sachtleben Minerals GmbH & Co. KG |

| | | | | |
|---|---|---|---|---|
| ¹⁾ DIN EN ISO 787-10 | | | | |

Um den Einfluss der erfindungsgemäßen Füllstoffmischung auf die Auspresskräfte einer diese enthaltenden Härterzusammensetzung zu zeigen, wurden die nachfolgend beschriebenen Härterzusammensetzungen hergestellt und deren Auspresskräfte gemessen.

Anhand der Beispielformulierungen unter Verwendung verschiedener Füllstoffe wird gezeigt, dass der Effekt auf der Partikelgröße der eingesetzten Rohstoffe beruht.

Es liegt im Wissen und Können des Fachmanns, bei der Formulierung von erfindungsgemäßen Zusammensetzungen chemische Wechselwirkungen zwischen den einzelnen Bestandteilen auszuschließen, wie z.B. die Verwendung säurelabiler Carbonate bei pH-Werten kleiner 7.

### Messung der Auspresskräfte

Zur Bestimmung der Auspresskräfte der Härterzusammensetzungen wurden diese blasenfrei 90 mm hoch in Plastikbecher des Innendurchmessers 40 mm und der Höhe 100 mm gegeben und über Nacht auf die Messtemperatur von 23°C temperiert.

Mittels Universal-Prüfmaschine der Fa. Zwick-Roell (Messbereich 5 kN) wurde eine Lochscheibe mit konischen Löchern (Durchmesser 35 mm; Art.-Nr. 130654) der Firma Anton Paar mit einer Geschwindigkeit von 3 mm/sec 50 mm tief in die Masse gepresst und die Kraft bei einer Messtiefe von 35 mm bestimmt.

Die Auspresskräfte der erfindungsgemäßen Härterzusammensetzungen sowie der Vergleichshärterzusammensetzungen wurden bei 23°C gemessen.

### Bestimmung Einfluss Gesamtfüllgrad

Um den Einfluss des Gesamtfüllgrades einer Härterzusammensetzung für Harzkomponenten auf Basis radikalisch härtbarer Verbindungen auf die Auspresskräfte zu zeigen, wurden Härterzusammensetzungen hergestellt, bei denen der Gesamtfüllgrad durch Zusatz eines weiteren Füllstoffes erhöht wurde. Zu berücksichtigen ist bei dieser Bestimmung auch der Grundfüllgrad, der den Gehalt an festem Peroxid und anderer Feststoffe vor Zugabe der Füllstoffe FS1 und FS2 angibt.

Hierzu wurde zunächst eine Vormischung V1 aus 48 Gew.-% einer 40 %-igen wässerigen Dibenzoylperoxid-Dispersion (LUPEROX® EZ-FLO; Arkema Inc.), 42,7 Gew.-% Wasser, 5,8 Gew.-% Natriumhydrogencitrat (Na₂HCitrat, Fa. Sigma Aldrich) und 3,5 Gew.-% eines Rheologieadditivs auf Basis eines aktivierten Schichtsilikats (OPTIGEL-CK; BYK-Chemie GmbH) hergestellt. Dazu wurde das Natriumhydrogencitrat im Wasser aufgelöst und der Peroxiddispersion zugegeben. Nach Zugabe des Schichtsilikates wurde kurz von Hand mittels eines Spatels umgerührt und die Vormischung in einem Dissolver (1L, Fa. PC Laborsystem; Dissolverscheibe 3,5 cm) für 10 Minuten mit einer Geschwindigkeit von 3500 U/min geschert.

Analog wurde die Vormischung V2 hergestellt, indem 87 Gew.-% BP 40SAQ mit 10,14 Gew.-% Wasser, 0,75 Gew% Kaliumdihydrogenphosphat, 0,11 Gew.-% Natriumhydroxid und 2 Gew.-% OPTIGEL-CK vermischt wurden.

Diese Vormischungen wurde dann jeweils in einer Gesamtmenge von ca. 400 g mit den in Tabelle 1 angegebenen Füllstoffen und Mengenverhältnissen mittels Holzspatel von Hand vermischt und wie oben beschrieben nochmals im Dissolver eingearbeitet.

Die Auspresskräfte der jeweils erhaltenen Härterzusammensetzungen wurden nach dem Temperieren über Nacht bei 23°C gemessen. Die Ergebnisse der Messungen sind in Tabelle 2 wiedergegeben.

### Bestimmung Grenzfüllgrad

Zur Bestimmung des Grenzfüllgrades wurde zunächst der maximale Füllgrad ermittelt, indem die Höchstmenge an erstem Füllstoff FS1, ausgehend von 52 Vol.-% Füllgrad, der Anteil an erstem Füllstoff FS1 schrittweise so erhöht wurde, dass sich der Füllgrad der Härterzusammensetzung um jeweils 2 Vol.-% erhöht. Nach jeder Zugabe wurde die Auspresskraft gemessen. Es wurde solange Füllstoff FS1 zugegeben, bis sich die Auspresskraft erstmals verdreifachte. Die Erhöhung der Auspresskraft wurde aus dem Verhältnis der Auspresskraft einer Mischung mit gegebenem Vol.-% an Füllstoff FS 1 (x Vol.-% FS 1) zu der Auspresskraft der Mischung mit 2 Vol.-% weniger Füllstoff FS 1 (x-2 Vol.-% FS 1) errechnet. Die Ergebnisse sind in Tabelle 3 wiedergegeben.

Die Vergleichshärterzusammensetzungen wurden mit dem jeweiligen Füllstoff FS1 bis zum Erreichen des maximalen Füllgrades und darüber hinaus gefüllt.

Aus den Tabellen 2 und 3 ergibt sich, dass beispielsweise bei der Zugabe von Millisil® W12 als Füllstoff FS1 dessen maximaler Füllgrad etwa 58 Vol.-% beträgt. Im Vergleich dazu beträgt der maximale Füllgrad für Millisil® W3 als Füllstoff FS1 etwa 64 Vol.%

Der Grenzfüllgrad liegt wie oben angegeben ca. 5 Vol% unter dem ermittelten maximalen Füllgrad des FS1 bei 58Vol% - 5 Vol% = 53 Vol% für Millisil® W12 bzw. bei 59 Vol% für Millisil® W3.

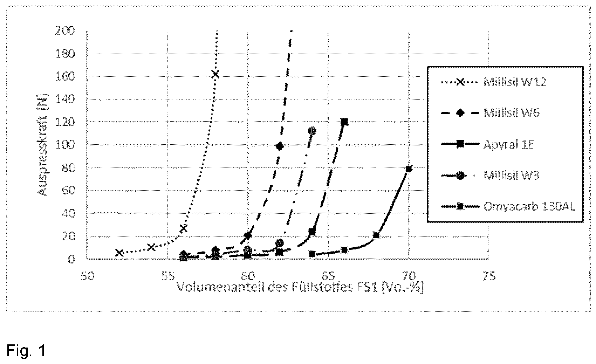

Fig. 1 zeigt die Abhängigkeit der Auspresskraft vom Volumenanteil des Füllstoffs FS1, wie er aus Tabelle 2 ersichtlich ist. Aus den Kurven wird deutlich, dass der Volumenanteil vom verwendeten Füllstoff abhängt und für jeden Füllstoff einzeln bestimmt werden muss.

Anhand folgender Auflistung wird die beispielhafte Berechnung des Füllgrades in Vol.-% ersichtlich.

| | Masseanteil | Masseanteil | Dichte | Volumen = Masse/Dichte | Vol.-% | Feststoff (Vol.-%) |
|---|---|---|---|---|---|---|
| Benzoylperoxid 40% | 25 | | | | | |
| Benzoylperoxid | | 10 | 1,3 | 7,7 | 15,1 | 15,1 |
| Wasser | 5 | 20 | 1 | 20,0 | 39,1 | |
| Füllstoff FS1 z.B. Quarz | 50 | 50 | 2,65 | 18,9 | 36,9 | 36,9 |
| Füllstoff FS2 z.B. Schwerspat | 20 | 20 | 4,4 | 4,5 | 8,9 | 8,9 |
| | 100 | 100 | | 51,1 | 100 | 60,9 |

Flüssige sowie bereits in den Peroxid-Dispersionen enthaltene Stoffe werden dabei dem wässrigen Anteil zugerechnet und hier sowie in den folgenden Beispielen ggf. nicht explizit aufgeführt. Verdickungsmittel und gelöste Salze werden nicht berücksichtigt.

**Tabelle 1: Einwaagen des Füllstoffs FS1 in g pro 100g Vormischung**

| | | **Füllgrad in Vol.-%*)** | | | | | | | | | |
|---|---|---|---|---|---|---|---|---|---|---|---|
| | | 52 | 54 | 56 | 58 | 60 | 62 | 64 | 66 | 68 | 70 |
| **FS1** | **Vormischung** | Einwaage Füllstoff FS1 [g] | | | | | | | | | |
| Millisil® W12 | V1 | 83 | 91,5 | 101 | 111 | 122,5 | | | | | |
| Millisil® W6 | V1 | | | 101 | 111 | 122,5 | 135 | 149 | | | |
| Apyral 1E | V1 | | 82,9 | 91,5 | 100,5 | 110,9 | 122,3 | 134,9 | | | |
| Millisil® W3 | V1 | | | 101 | 111 | 122,5 | 135 | 149 | | | |
| Omyacarb® 130AL | V2 | | | | | | | 98 | 102,2 | 106,5 | 110,5 |

| | | | | | | | | | | | |
|---|---|---|---|---|---|---|---|---|---|---|---|
| *) beinhaltet festes Peroxid und Füllstoff FS1 | | | | | | | | | | | |

**Tabelle 2: Ergebnisse der Messung der Auspresskräfte der Mischungen aus Tabelle 1**

| | | **Füllgrad in Vol.-%** | | | | | | | | | |
|---|---|---|---|---|---|---|---|---|---|---|---|
| | | 52 | 54 | 56 | 58 | 60 | 62 | 64 | 66 | 68 | 70 |
| | | | | | | | | | | | |

| | **Vormischung** | **Auspresskraft [N]** | | | | | | | | | |
|---|---|---|---|---|---|---|---|---|---|---|---|
| Millisil® W12 | V1 | 5,4 | 10,3 | 27,3 | 161,8 | 1481,2 | | | | | |
| Millisil® W6 | V1 | | | 4,2 | 8,1 | 20,8 | 98,7 | 458 | | | |
| Apyral 1E | V1 | | | 1,5 | 2,2 | 3,6 | 6,2 | 24 | 120 | | |
| Millisil® W3 | V1 | | | 1,7 | 4 | 8,3 | 14 | 112,2 | | | |
| Omyacarb 130AL | V2 | | | | | | | 4,2 | 8,1 | 20,8 | 79 |

| | | | | | | | | | | | |
|---|---|---|---|---|---|---|---|---|---|---|---|
| *) beinhaltet festes Peroxid und Füllstoff FS1 | | | | | | | | | | | |

**Tabelle 3: Verhältnisse der Auspresskräfte aus Tabelle 2**

| | | **Füllgrad in Vol.-%** | | | | | | | | | |
|---|---|---|---|---|---|---|---|---|---|---|---|
| | | 52 | 54 | 56 | 58 | 60 | 62 | 64 | 66 | 68 | 70 |
| | | | | | | | | | | | |

| | **Vormischung** | **Verhältnis Auspresskräfte (aus Tab. 2)** | | | | | | | | | |
|---|---|---|---|---|---|---|---|---|---|---|---|
| Millisil® W12 | V1 | | 1,9 | 2,7 | **5,9** | **9,2** | | | | | |
| Millisil® W6 | V1 | | | | 1,9 | 2,6 | **4,8** | **4,6** | | | |
| Apyral 1E | V1 | | | | 1,4 | 1,7 | 1,7 | **3,9** | **5,0** | | |
| Millisil® W3 | V1 | | | | 2,4 | 2,1 | 1,7 | **8,0** | | | |
| Omyacarb 130AL | V2 | | | | | | | | 1,9 | 2,6 | **3,8** |

| | | | | | | | | | | | |
|---|---|---|---|---|---|---|---|---|---|---|---|
| *) beinhaltet festes Peroxid und Füllstoff FS1 | | | | | | | | | | | |

### Bestimmung Einfluss Partikelgröße

Um den Einfluss der Partikelgröße der Füllstoffe einer Härterzusammensetzung für Harzkomponenten auf Basis radikalisch härtbarer Verbindungen auf die Auspresskräfte zu zeigen, wurden Härterzusammensetzungen aus der Vormischung 1 hergestellt, bei denen Füllstoffmischungen aus einem ersten Füllstoff und einem zweiten Füllstoff, verwendet wurden, wobei die Partikelgröße des zweiten Füllstoffs variiert wurde. Außerdem wurde die Füllstoffmenge erhöht, indem weitere andere Füllstoffe zugegeben wurden. Die jeweils verwendeten Füllstoffe und die entsprechenden Mengen sind in Tabelle 4 angegeben. Die Auspresskräfte der jeweils erhaltenen Härterzusammensetzungen wurden nach dem Temperieren über Nacht bei 23°C gemessen. Die Ergebnisse der Messungen sind in Tabelle 4 wiedergegeben.

An Stelle der Vormischung 1 wurden außerdem noch andere Härterzusammensetzungen mit den in der Tabelle 5 angegebenen Bestandteilen in den ebenfalls in Tabelle 5 angegebenen Mengen verwendet. Auch hiervon wurden die Auspresskräfte der jeweils erhaltenen Härterzusammensetzungen nach dem Temperieren über Nacht bei 23°C gemessen. Die Ergebnisse der Messungen sind in Tabelle 5 wiedergegeben. Die Mischung der Härterzusammensetzungen in den in Tabelle 5 gezeigten Beispielen wurden analog der Vormischung 1 hergestellt. Bei Verwendung von Axilat RH23 als Rheologieadditiv wurde die Vormischung vor Fertigstellung der Masse im Dissolver über Nacht stehen gelassen um das Verdickungsmittel anzuquellen.

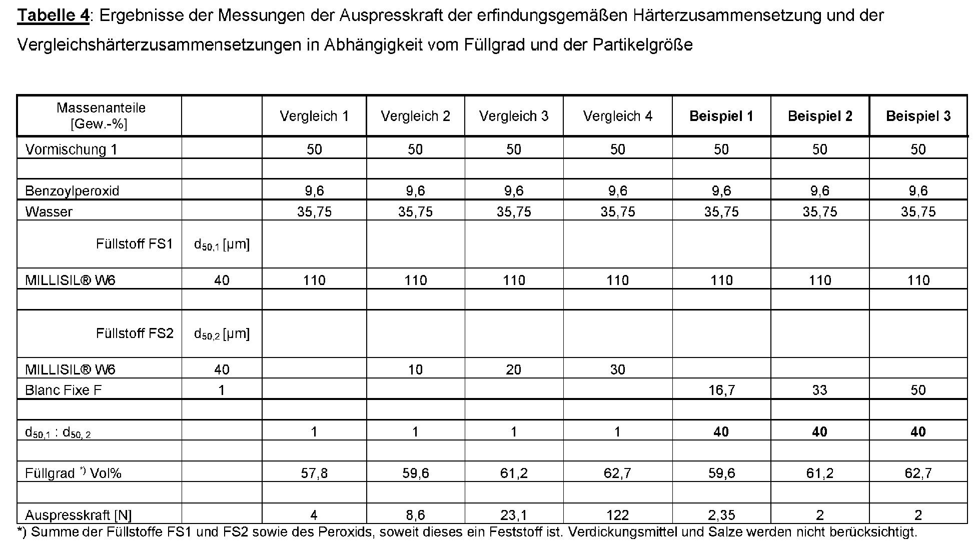

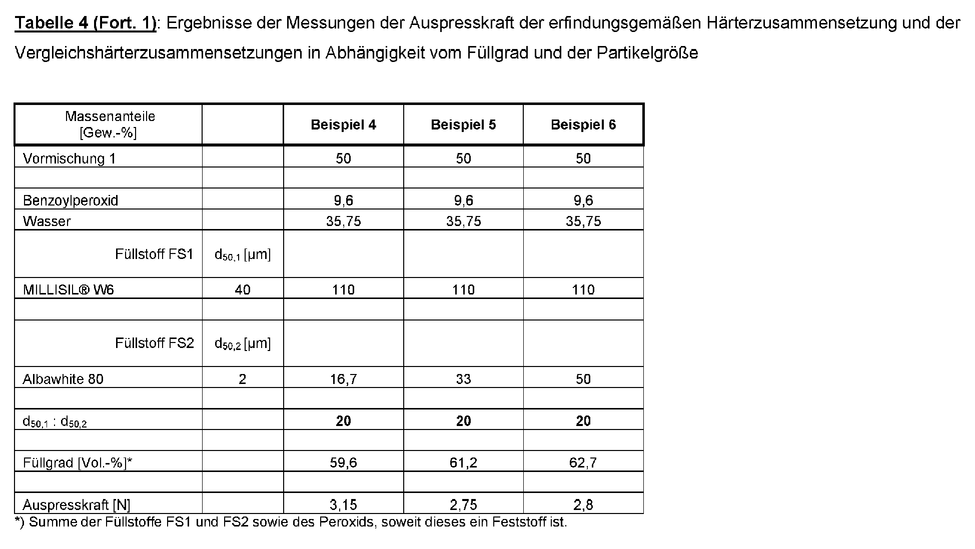

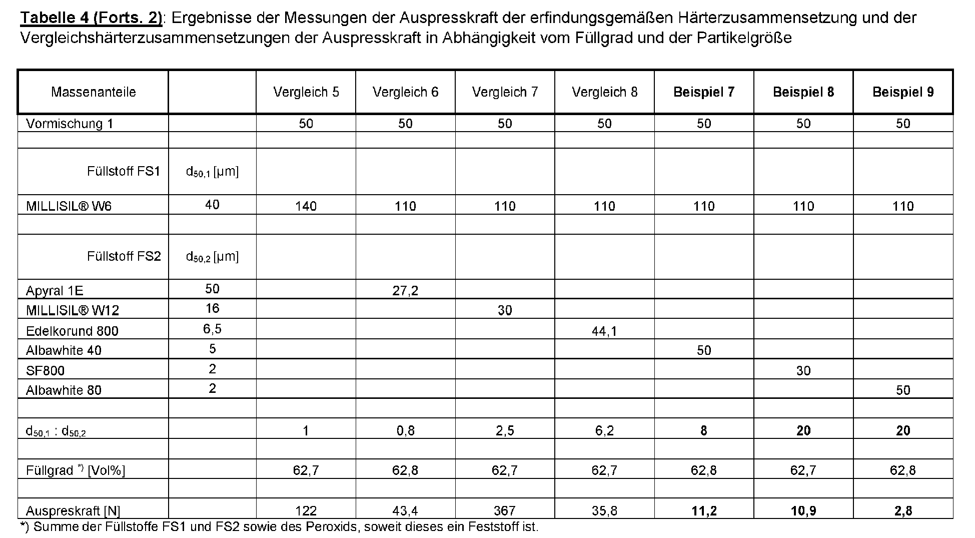

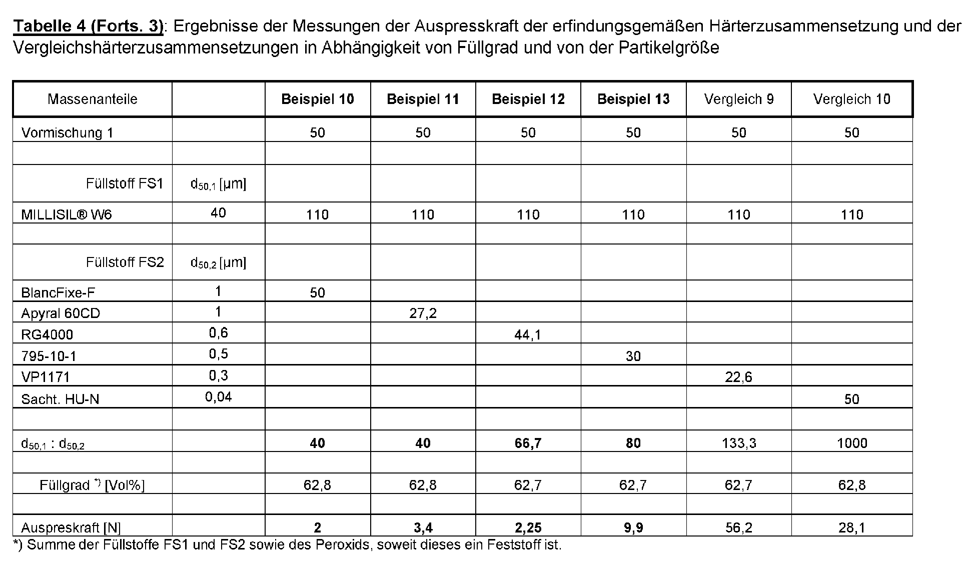

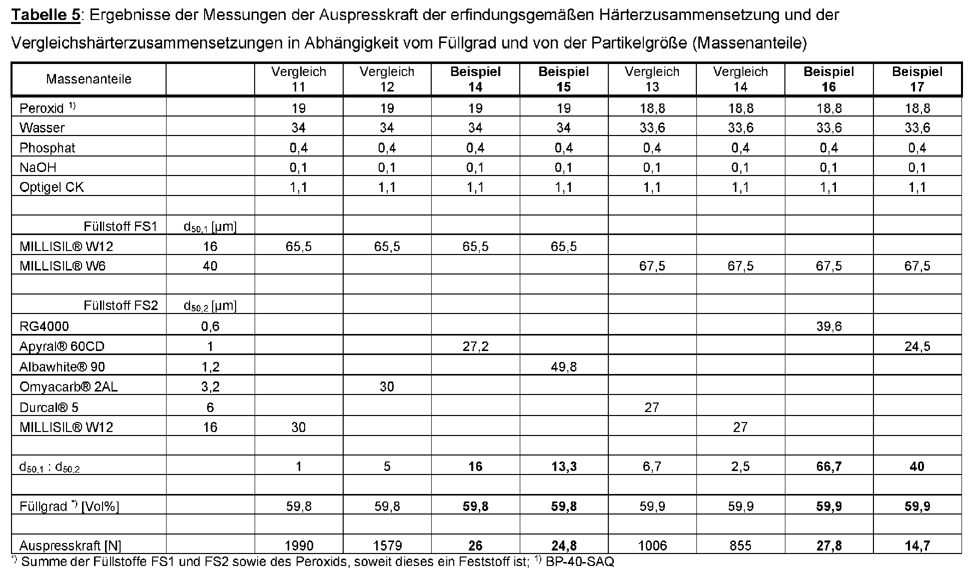

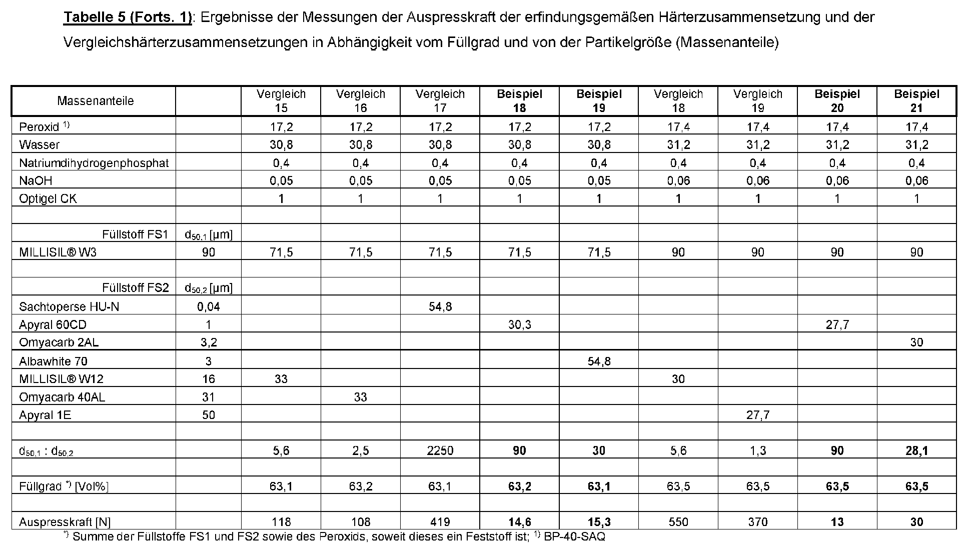

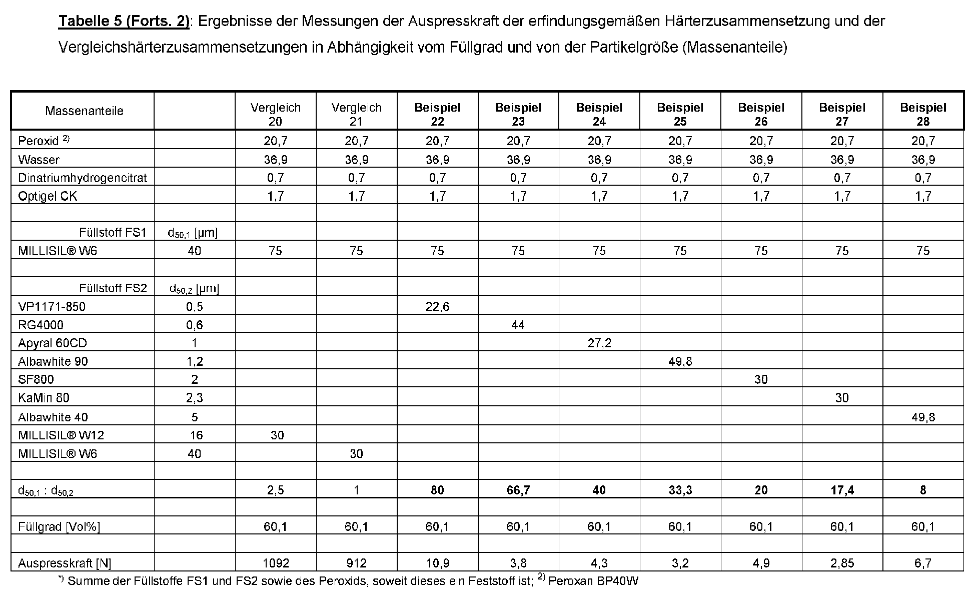

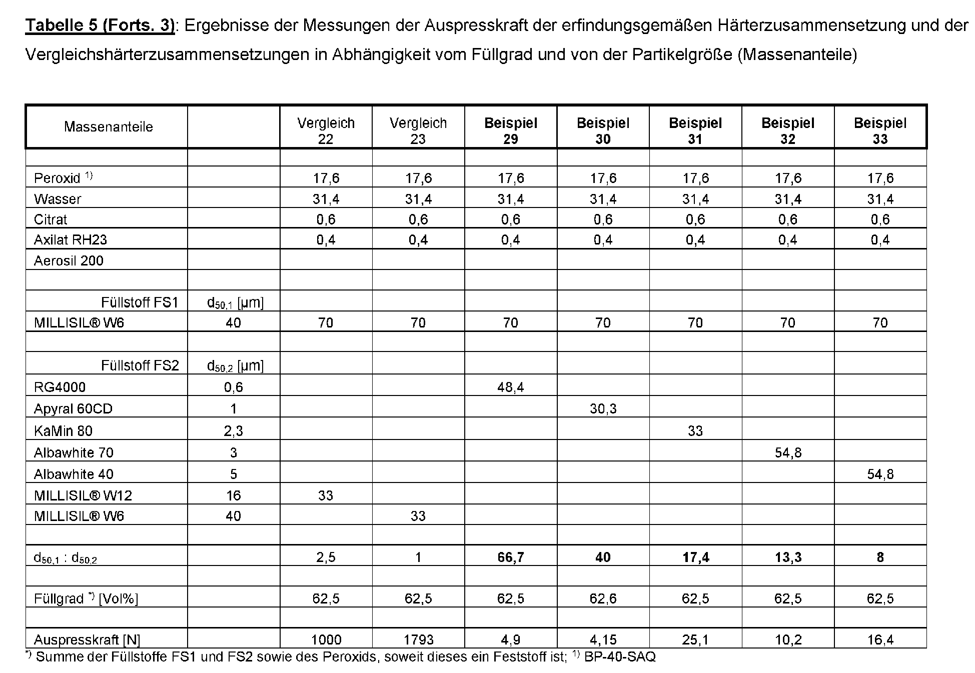

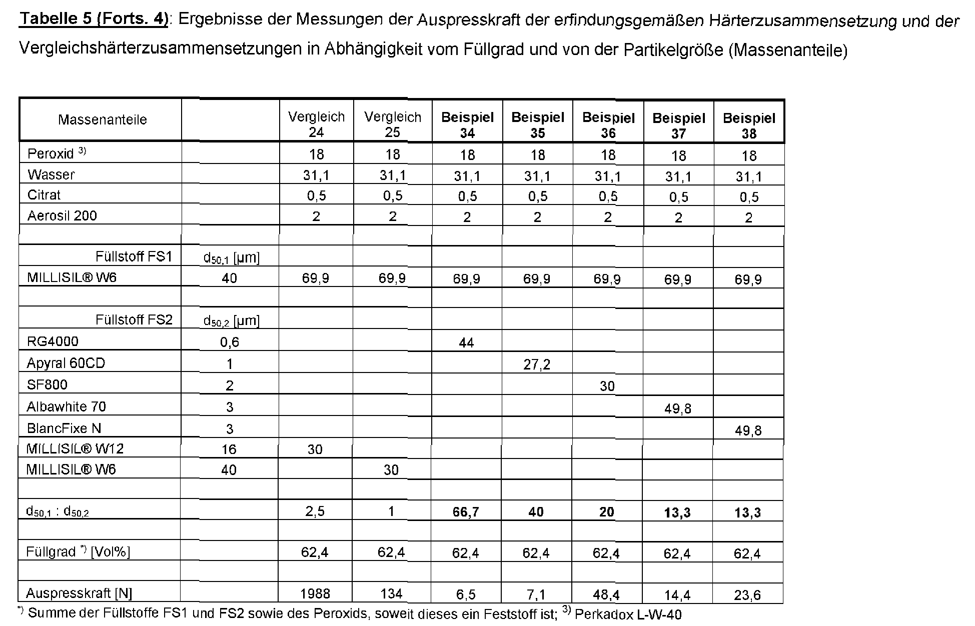

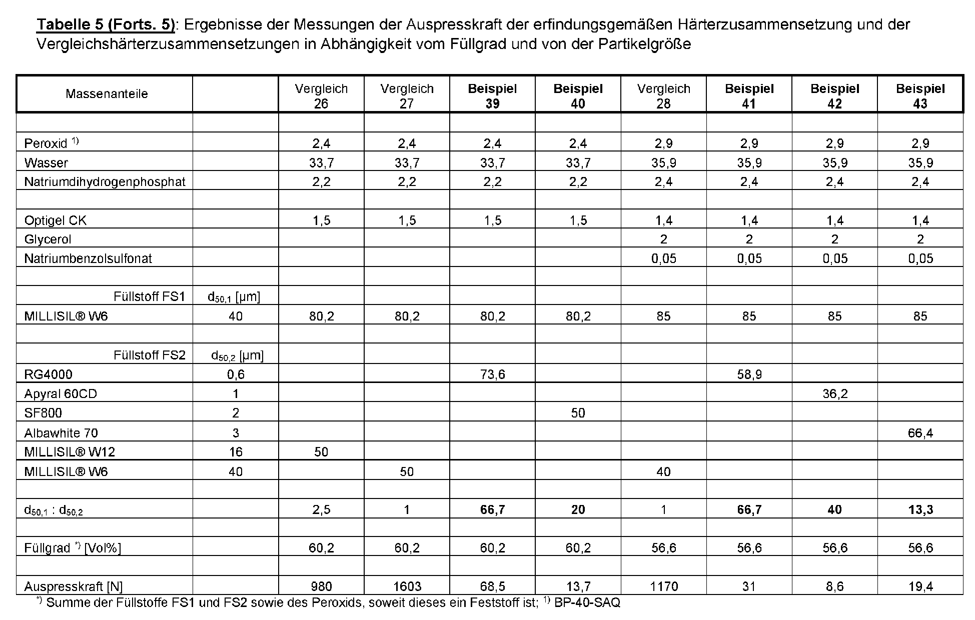

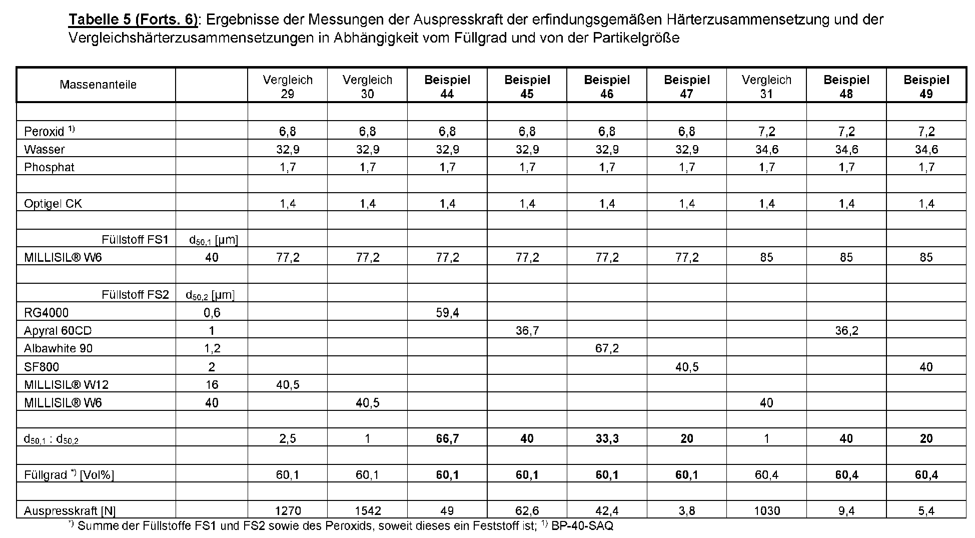

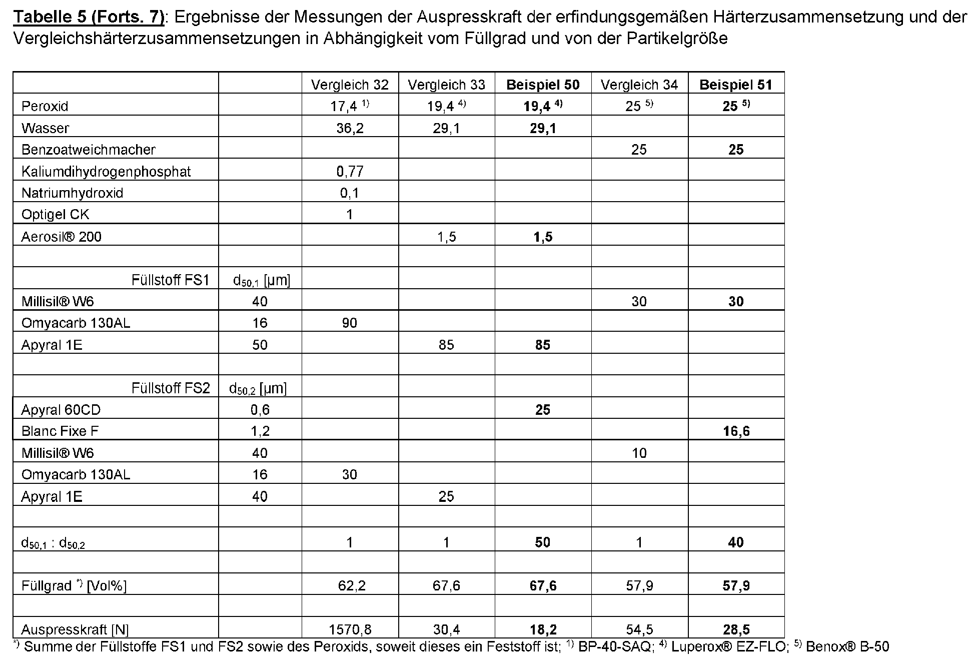

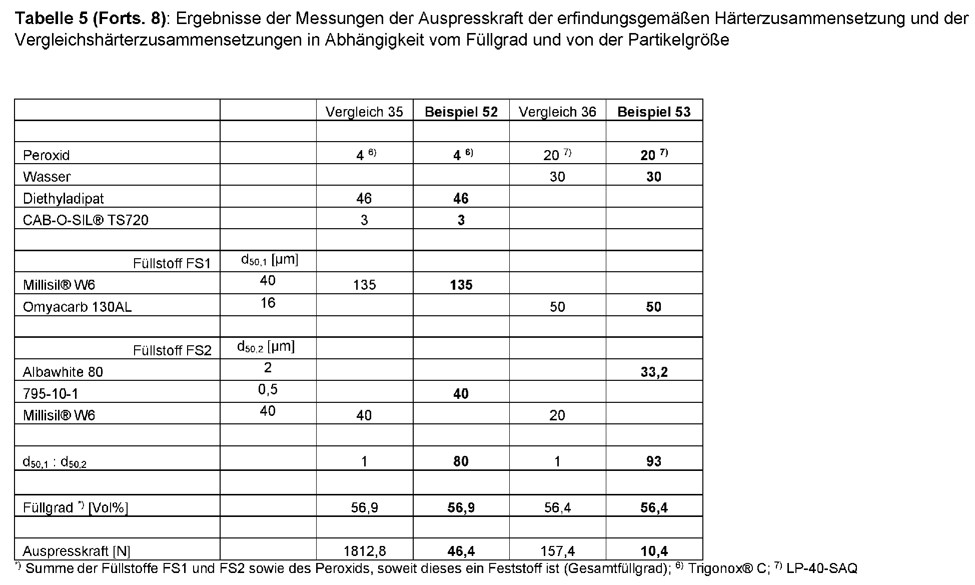

Aus den in den Tabellen 4 und 5 gezeigten Ergebnissen der Messung der Auspresskräfte wird deutlich, dass durch eine Erhöhung des Gesamtfüllgrades von 47,3% (Vol/Vol) auf 53,4 % (Vol/Vol), durch Zusatz eines zweiten Füllstoffes, der so gewählt wurde, dass das Verhältnis d_{50,1} : d_{50,2} 40 bzw. 20 betrug, die Auspresskraft nicht erhöht wurde. Wird derselbe Füllgrad durch weiteren Zusatz des ersten Füllstoffes eingestellt, so dass das Verhältnis d_{50,1} : d_{50,2} 1 betrug, wurde ein Anstieg der Auspresskraft von 4 N auf 122 N beobachtet.

Ferner zeigt sich aus den in den Tabellen 4 und 5 gezeigten Ergebnissen der Messung der Auspresskräfte deutlich, dass bei Verwendung einer Füllstoffmischung aus einem ersten und einem zweiten Füllstoff die Partikelgröße des zweiten Füllstoffs einen deutlichen Einfluss auf die Auspresskräfte hat. Wird der zweite Füllstoff so gewählt, dass das Verhältnis d_{50,1} : d_{50,2} zwischen 8 und 100 liegt, erhöhen sich die Auspresskräfte die Messwerte kaum und liegen im Bereich von bzw. unter 100 N. Wird der zweite Füllstoff so gewählt, dass das Verhältnis d_{50,1} : d_{50,2} außerhalb des Bereichs von 8 bis 100 liegt, erhöhen sich die Auspresskräfte deutlich und steigen zum Teil um das zehnfache an.

## Patentansprüche

1. Härterzusammensetzung für ein Reaktivharzsystem mit einem Reaktivharz auf Basis radikalisch härtbarer, ethylenisch ungesättigter Verbindungen, wobei die Härterzusammensetzung ein Härtungsmittel für das Reaktivharz und eine Füllstoffmischung umfasst, wobei
die Füllstoffmischung aus einem ersten Füllstoff mit einer ersten mittleren Korngröße d_{50,1} und einem zweiten Füllstoff mit einer zweiten mittleren Korngröße d_{50,2} besteht, wobei die erste mittlere Korngröße d_{50,1} des ersten Füllstoffs größer als die zweite mittlere Korngröße d_{50,2} des zweiten Füllstoffs ist (d_{50,1} > d_{50,2}) und das Verhältnis d_{50,1} zu d_{50,2} (d_{50,1} : d_{50,2}) im Bereich von etwa 8:1 bis etwa 100:1 liegt.

2. Härterzusammensetzung nach einem der vorhergehenden Ansprüche, wobei die erste mittlere Korngröße d_{50,1} des ersten Füllstoffs 16 bis 130 µm beträgt.

3. Härterzusammensetzung nach Anspruch 1 oder 2, wobei die zweite mittlere Korngröße d_{50,2} des zweiten Füllstoffs 0,16 bis 16 µm beträgt.

4. Härterzusammensetzung nach einem der vorhergehenden Ansprüche, wobei die beiden Füllstoffe der Füllstoffmischung aus der Gruppe ausgewählt sind, bestehend aus Metalloxiden, Halbmetalloxiden, Metallhydroxiden, Metallsalzen, mineralischen oder mineralähnlichen Füllstoffen, hydraulisch härtbaren Füllstoffen, Metallen, Ruß und polymeren Füllstoffen.

5. Härterzusammensetzung nach Anspruch 4, wobei der erste Füllstoff aus der Gruppe ausgewählt ist, bestehend aus Metalloxiden, Metallhydroxiden und Metallsalzen.

6. Härterzusammensetzung nach einem der vorhergehenden Ansprüche, wobei der Anteil an erstem Füllstoff größer als der Anteil an zweiten Füllstoff ist.

7. Härterzusammensetzung nach einem der vorhergehenden Ansprüche, wobei die Härterzusammensetzung ein Härtungsmittel für ein Reaktivharz auf Basis einer radikalisch härtbaren Verbindung enthält.

8. Härterzusammensetzung nach einem der vorhergehenden Ansprüche, wobei die Härterzusammensetzung ferner Wasser enthält.

9. Verwendung einer Füllstoffmischung aus einem ersten Füllstoff mit einer ersten mittleren Korngröße d_{50,1} und einem zweiten Füllstoff mit einer zweiten mittleren Korngröße d_{50,2}, wobei die erste mittlere Korngröße d_{50,1} des ersten Füllstoffs größer als die zweite mittlere Korngröße d_{50,2} des zweiten Füllstoffs ist (d_{50,1} > d_{50,2}) und das Verhältnis d_{50,1} zu d_{50,2} (d_{50,1} : d_{50,2}) im Bereich von 8:1 bis 100: 1 liegt, in einer Härterzusammensetzung für Reaktivharz-Zusammensetzung mit einem Reaktivharz auf Basis radikalisch härtbarer, ethylenisch ungesättigter Verbindungen für die chemische Befestigung zur Erhöhung des Füllstoffanteils unter Erhalt der Fließfähigkeit der Härterzusammensetzung.

10. Verwendung nach Anspruch 9, wobei die erste mittlere Korngröße d_{50,1} des ersten Füllstoffs 16 bis 130 µm beträgt.

11. Verwendung nach Anspruch 9 oder 10, wobei die zweite mittlere Korngröße d_{50,2} des zweiten Füllstoffs 0,16 bis 16 µm beträgt.

12. Mehrkomponentiges Reaktionsharzsystem, mit einer Harzkomponente, umfassend eine radikalisch härtbare ungesättigte Verbindung, und mit einer Härterkomponente, umfassend eine Härterzusammensetzung nach einem der Ansprüche 1 bis 8.

13. Mehrkomponentiges Reaktionsharzsystem nach Anspruch 12, wobei die radikalisch härtbare, ethylenisch ungesättigte Verbindung wenigstens ein Reaktionsharz, wenigstens einen Reaktivverdünner oder eine Mischung aus wenigstens einem Reaktionsharz und einem Reaktivverdünner umfasst.

14. Mehrkomponentiges Reaktionsharzsystem nach Anspruch 13, wobei das Reaktionsharz eine Verbindung auf Urethan(meth)acrylatbasis, Epoxy(meth)acrylatbasis, ein Methacrylat eines alkoxylierten Bisphenols oder auf Basis weiterer ethylenisch ungesättigter Verbindungen ist.

15. Mehrkomponentiges Reaktionsharzsystem nach einem der Ansprüche 12 bis 14, wobei die Harzkomponente ferner einen anorganischen Zuschlagstoff umfasst.

16. Mehrkomponentiges Reaktionsharzsystem nach einem der Ansprüche 12 bis 15, wobei die Harzkomponente ferner einen Inhibitor und/oder einen Beschleuniger umfasst.

17. Mehrkomponentiges Reaktionsharzsystem nach einem der Ansprüche 12 bis 16, wobei das Reaktionsharzsystem ein Zweikomponenten-System ist.
